# EUROPEAN PATENT APPLICATION

(11) **EP 4 472 119 A1**
(43) Date of publication of application: **04.12.2024**
(21) Application number: 23746071.2
(22) Date of filing: 16.01.2023
(51) Int. Cl.: H04L 5/00

(54) **SIGNALING TRANSMISSION METHOD, DEVICE, AND STORAGE MEDIUM**

(30) Priority: 28.01.2022 CN 202210108147
(71) Applicant: Datang Mobile Communications Equipment Co., Ltd., Beijing 100085 (CN)
(72) Inventor: ZHANG, Yinghao, Beijing 100085 (CN); WANG, Jiaqing, Beijing 100085 (CN); YANG, Meiying, Beijing 100085 (CN); LUO, Chen, Beijing 100085 (CN); LI, Yaomin, Beijing 100085 (CN)
(74) Representative: Studio Torta S.p.A.
(86) International application number: PCT/CN2023/072381
(87) International publication number: WO 2023/143189

(57) **Abstract**

Embodiments of the present disclosure provide a signaling transmission method, a device, and a storage medium. The method comprises: sending indication information on an uplink transmission resource allocated via a configured grant (CG), or receiving indication information on a downlink transmission resource allocated via semi-persistent scheduling (SPS), wherein the indication information is used for indicating a target transmission resource. A terminal sends the indication information for indicating the target transmission resource on the CG-allocated uplink transmission resource, so that a network device can obtain an actual sending situation of a resource reserved for the CG within a period of time, so as to prevent uplink CG resource waste or resource collision; or the terminal receives the indication information for indicating the target transmission resource on the SPS-configured downlink transmission resource, so that the terminal can know whether to detect and receive data on the target transmission resource, so as to avoid unnecessary power consumption overhead.

## Description

### CROSS-REFERENCES TO RELATED APPLICATIONS

The present application claims priority to Chinese patent application No. 2022101081477 filed on January 28, 2020, entitled "Signaling Transmission Method, Device, and Storage Medium", which is hereby incorporated by reference in its entirety.

### FIELD

The present application relates to the field of radio communication, and in particular, to methods and apparatuses for transmitting signaling and a storage medium.

### BACKGROUND

Due to periodic transmission characteristics of an extended reality (XR) traffic, applying a configured grant (CG) or semi-persistent scheduling (SPS) of a semi-statically configured resource to the XR traffic may effectively reduce signaling overhead and improve a system capacity.

Current SPS/CG cannot match a non-integer periodicity of XR. A base station needs to configure multiple SPSs/CGs for the terminal based on a transmission requirement of a maximum packet to ensure a latency requirement of the XR traffic and adapt to a size of an XR packet, which reserves too many resources for an XR terminal, and no data is transmitted in part of SPS/CG transmission opportunities. When a size of an arriving XR packet is small, the terminal only needs to transmit a physical uplink shared channel (PUSCH) in some CG transmission opportunities. The terminal may provide the base station with a volume of uplink data in a logical channel of the terminal through a buffer status reporting (BSR) mechanism, but the base station cannot reallocate an idle uplink CG resource, resulting in resource waste.

Similarly, the base station may only transmit a physical downlink shared channel (PDSCH) in some SPS transmission opportunities, but the terminal will perform detection and reception on PDSCHs for each SPS transmission opportunity, resulting in a waste of terminal power consumption.

### BRIEF SUMMARY

In view of the above problems in the related art, embodiments of the present application provide methods and apparatuses for transmitting signaling and a storage medium.

An embodiment of the present application provides a method for transmitting signaling, including:
transmitting indication information on an uplink transmission resource configured by a configured grant (CG), or receiving indication information on a downlink transmission resource configured by a semi-persistent scheduling (SPS),
where the indication information is used to indicate a target transmission resource.

In an embodiment, transmitting the indication information on the uplink transmission resource configured by the CG includes:
transmitting the indication information on a first uplink CG resource set, where the target transmission resource includes a second uplink CG resource set, and a first association relationship exists between the first uplink CG resource set and the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, transmitting the indication information on the first uplink CG resource set includes:
transmitting a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when a terminal receives first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

In an embodiment, receiving the indication information on the downlink transmission resource configured by the SPS includes:
receiving the indication information on a first downlink SPS resource set, where the target transmission resource includes a second downlink SPS resource set, and a second association relationship exists between the first downlink SPS resource set and the second downlink SPS resource set.

In an embodiment, after receiving the indication information on the first downlink SPS resource set, the method further includes:
skipping detection and reception on an SPS transmission opportunity in the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, receiving the indication information on the first downlink SPS resource set includes:
receiving a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when a terminal transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides a method for transmitting signaling, including:
receiving indication information on an uplink transmission resource configured by a configured grant (CG), or transmitting indication information on a downlink transmission resource configured by a semi-persistent scheduling (SPS),
where the indication information is used to indicate a target transmission resource.

In an embodiment, receiving the indication information on the uplink transmission resource configured by the CG includes:
receiving the indication information on a first uplink CG resource set, where the target transmission resource includes a second uplink CG resource set, and a first association relationship exists between the first uplink CG resource set and the second uplink CG resource set.

In an embodiment, after receiving the indication information on the first uplink CG resource set, the method further includes:
reallocating the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, receiving the indication information on the first uplink CG resource set includes:
receiving a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, transmitting the indication information on the downlink transmission resource configured by the SPS includes:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, transmitting the indication information on the downlink transmission resources configured by the SPS includes:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides a terminal device, including a memory, a transceiver and a processor,
where the memory is used to store a computer program, the transceiver is used to transmit and receive data under the control of the processor, and the processor is used to read the computer program in the memory and perform steps of the method for transmitting the signaling described above.

In an embodiment, transmitting the indication information on the uplink transmission resource configured by the CG includes:
transmitting the indication information on a first uplink CG resource set, where the target transmission resource includes a second uplink CG resource set, and a first association relationship exists between the first uplink CG resource set and the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, transmitting the indication information on the first uplink CG resource set includes:
transmitting a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the terminal device receives first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

In an embodiment, receiving the indication information on the downlink transmission resource configured by the SPS includes:
receiving the indication information on a first downlink SPS resource set, where the target transmission resource includes a second downlink SPS resource set, and a second association relationship exists between the first downlink SPS resource set and the second downlink SPS resource set.

In an embodiment, after receiving the indication information on the first downlink SPS resource set, the steps further include:
skipping detection and reception on an SPS transmission opportunity in the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, receiving the indication information on the first downlink SPS resource set includes:
receiving a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the terminal device transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides a network device, including a memory, a transceiver and a processor,
where the memory is used to store a computer program, the transceiver is used to transmit and receive data under control of the processor, and the processor is used to read the computer program in the memory and perform steps of the method for transmitting the signaling described above.

In an embodiment, receiving the indication information on the uplink transmission resource configured by the CG includes:
receiving the indication information on a first uplink CG resource set, where the target transmission resource includes a second uplink CG resource set, and a first association relationship exists between the first uplink CG resource set and the second uplink CG resource set.

In an embodiment, after receiving the indication information on the first uplink CG resource set, the steps further include:
reallocating the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, receiving the indication information on the first uplink CG resource set includes:
receiving a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, transmitting the indication information on the downlink transmission resource configured by the SPS includes:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, transmitting the indication information on the downlink transmission resources configured by the SPS includes:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides an apparatus for transmitting signaling, including:
a first transmitting module, used for transmitting indication information on an uplink transmission resource configured by a configured grant (CG), or receiving indication information on a downlink transmission resource configured by a semi-persistent scheduling (SPS),
where the indication information is used to indicate a target transmission resource.

In an embodiment, the first transmitting module is further used for:
transmitting the indication information on a first uplink CG resource set, where the target transmission resource includes a second uplink CG resource set, and a first association relationship exists between the first uplink CG resource set and the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, the first transmitting module is further used for:
transmitting a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when a terminal receives first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

In an embodiment, the first transmitting module is further used for:
receiving the indication information on a first downlink SPS resource set, where the target transmission resource includes a second downlink SPS resource set, and a second association relationship exists between the first downlink SPS resource set and the second downlink SPS resource set.

In an embodiment, the apparatus further includes a skipping module, which is used for:
skipping detection and reception on an SPS transmission opportunity in the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, the first transmitting module is further used for:
receiving a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when a terminal transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides an apparatus for transmitting signaling, including:
a second transmitting module, used for receiving indication information on an uplink transmission resource configured by a configured grant (CG), or transmitting indication information on a downlink transmission resource configured by a semi-persistent scheduling (SPS),
where the indication information is used to indicate a target transmission resource.

In an embodiment, the second transmitting module is further used for:
receiving the indication information on a first uplink CG resource set, where the target transmission resource includes a second uplink CG resource set, and a first association relationship exists between the first uplink CG resource set and the second uplink CG resource set.

In an embodiment, the apparatus further includes:
an allocation module, used for reallocating the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, the second transmitting module is further used for:
receiving a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, the second transmitting module is further used for:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, the second transmitting module is further used for:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

An embodiment of the present application further provides a processor-readable storage medium, where the processor-readable storage medium stores a computer program, and the computer program is used to cause a processor to perform the methods for transmitting the signaling described above.

An embodiment of the present application further provides a computer-readable storage medium, where the computer-readable storage medium stores a computer program, and the computer program is used to cause a computer to perform the methods for transmitting the signaling described above.

An embodiment of the present application further provides a communication device-readable storage medium, where the communication device-readable storage medium stores a computer program, and the computer program is used to cause a communication device to perform the methods for transmitting the signaling described above.

An embodiment of the present application further provides a chip product-readable storage medium, where the chip product-readable storage medium stores a computer program, and the computer program is used to cause a chip product to perform the methods for transmitting the signaling described above.

In the methods and apparatuses for transmitting the signaling, and the storage medium provided by embodiments of the present application, through transmitting, by the terminal, the indication information indicating the target transmission resource on the uplink transmission resource configured by the CG, the network device may obtain the actual transmission status of the resources reserved for the CG within a period of time, to avoid uplink CG resource waste or resource collision; or, through receiving, by the terminal, the indication information indicating the target transmission resource on the downlink transmission resource configured by the SPS, the terminal may obtain whether it is required to detect and receive data on the target transmission resource, to avoid unnecessary power consumption.

### BRIEF DESCRIPTION OF THE DRAWINGS

In order to more clearly illustrate the solutions disclosed in the embodiments of the present application, the drawings used in the description of the embodiments are briefly described below. The drawings in the following description are only some embodiments of the present application, and other drawings may be obtained according to these drawings without any creative work for those skilled in the art.
FIG. 1 is a schematic diagram of a periodic transmission of an extended reality (XR) traffic in the related art;
FIG. 2 is a schematic diagram of data arrival and packet traffic distribution of an XR traffic in the related art;
FIG. 3 is a schematic diagram of different data stream transmissions in an XR traffic in the related art;
FIG. 4 is a schematic diagram of a transmission of a configured grant type 2 in the related art;
FIG. 5 is a schematic diagram of multiple configured grants (CGs) supporting different data stream transmissions in the related art;
FIG. 6 is a schematic diagram of transmitting an XR traffic using multiple semi-persistent scheduling (SPSs)/CGs in the related art;
FIG. 7 is a first schematic flowchart of a method for transmitting signaling according to an embodiment of the present application;
FIG. 8 is a second schematic flowchart of a method for transmitting signaling according to an embodiment of the present application;
FIG. 9 is a first schematic diagram of a CG group transmitting an XR traffic according to an embodiment of the present application;
FIG. 10 is a first schematic diagram of a bit field included in indication information when a CG/SPS group transmits an XR traffic according to an embodiment of the present application;
FIG. 11 is a second schematic diagram of a CG group transmitting an XR traffic according to an embodiment of the present application;
FIG. 12 is a second schematic diagram of a bit field included in indication information when a CG/SPS group transmits an XR traffic according to an embodiment of the present application;
FIG. 13 is a third schematic diagram of a CG group transmitting an XR traffic according to an embodiment of the present application;
FIG. 14 is a fourth schematic diagram of a CG group transmitting an XR traffic according to an embodiment of the present application;
FIG. 15 is a schematic diagram of an SPS group transmitting an XR traffic according to an embodiment of the present application;
FIG. 16 is a schematic structural diagram of a terminal device according to an embodiment of the present application;
FIG. 17 is a schematic structural diagram of a network device according to an embodiment of the present application;
FIG. 18 is a first schematic structural diagram of an apparatus for transmitting signaling according to an embodiment of the present application; and
FIG. 19 is a second schematic structural diagram of an apparatus for transmitting signaling according to an embodiment of the present application.

### DETAILED DESCRIPTION

In order to better describe solutions of embodiments of the present application, related art is introduced below.

### (1) Extended reality (XR) traffic

XR traffic is one of the most important media applications in the 5th generation mobile communication (5G), and includes three representative forms: augmented reality (AR), mixed reality (MR), and virtual reality (VR). Environments combining reality and virtuality, and related human-computer interactions are generated by computer technologies and wearable devices. From AR to VR, the degree of virtuality gradually changes from weak to strong, which is from reality enhancement input by a limited sensor to fully immersive sensory experience. Through various XR devices, an immersive experience of seamless transition between the virtual world and the real world is achieved, which presents an illusion of human vision, human hearing or environment.

### (2) Characteristics of the XR traffic

According to a research on the XR traffic in the 3rd generation partnership project (3GPP), the XR traffic has the following three types of characteristics.

### ① A periodic transmitting/receiving characteristic

A source of the XR traffic may generate corresponding packets at a certain refresh rate. For example: a refresh rate being 60 FPS means that 60 data frames are generated per second; a time interval between each data frame is 16.67 ms, that is, an arrival periodicity is 16.67 ms; a refresh rate being 120 FPS means that 120 data frames are generated per second; and a time interval between each data frame is 8.33 ms, that is, an arrival periodicity is 8.33 ms, where ms represents milliseconds, and FPS represents frames per second.

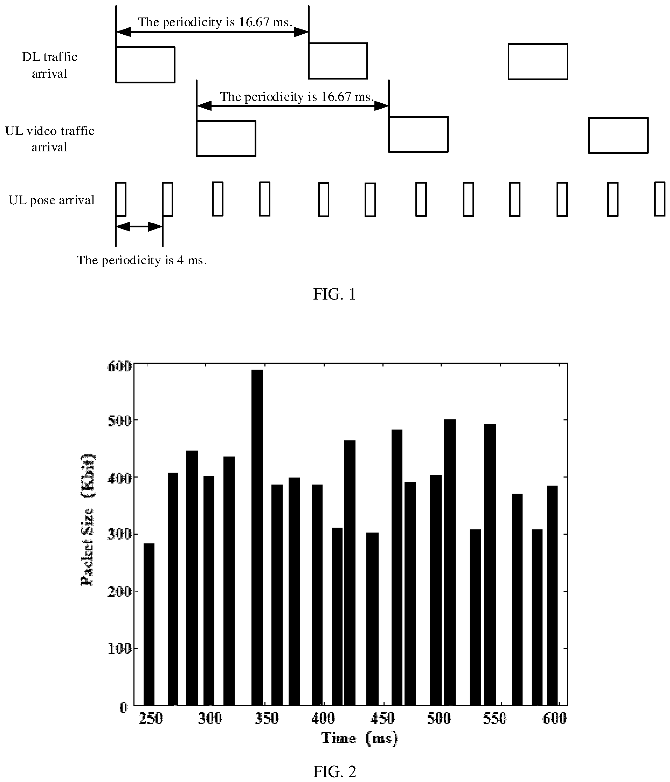

FIG. 1 is a schematic diagram of a periodic transmission of an XR traffic in the related art. As shown in FIG. 1, the XR traffic includes an uplink (UL) traffic, a downlink (DL) traffic, a typical audio traffic, or a typical video traffic, etc. The DL traffic reaches 60 frames per second, that is, its arrival periodicity is 16.67 ms. For the UL traffic, it includes a video stream, an audio stream, or an UL pose, etc. An arrival periodicity of the UL video stream traffic is 16.67 ms, and an arrival periodicity of the UL pose traffic is more intensive, which reaches 4 ms for one pose packet.

### (2) A time-varying characteristic of a packet size

A packet size of the XR traffic follows the Pareto distribution, and a packet size and a delay jitter of a variable-rate video stream traffic follow characteristics of the truncated Gaussian distribution. At different times, the packet size of the XR traffic arrival is variable.

FIG. 2 is a schematic diagram of data arrival and packet traffic distribution of an XR traffic in the related art. As shown in FIG. 2, a horizontal axis represents time, which is in a unit of milliseconds (ms), and a vertical axis represents a packet size, which is in a unit of kilobits (Kbit). It may be seen from FIG. 2 that compared with a typical small packet transmission of ultra-reliable and low latency communications (URLLC), the packet size of the XR traffic changes with time.

### (3) A multi-stream characteristic of a packet

For the XR traffic, multiple data streams may exist simultaneously. For example, an I-frame, a P-frame, a video stream, an audio stream, and a pose/control data stream, etc. may exist simultaneously. Based on a current 5G quality instruction (QI) quality of service (QoS) requirement, requirement levels of different data streams may be different, and different data streams are independent. For an XR packet, reception of one XR packet is completed only when transmissions of all data streams are completed.

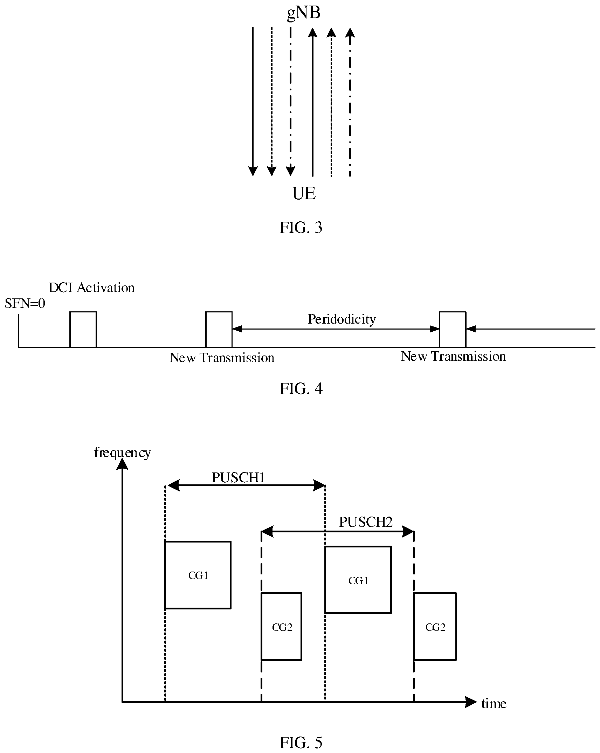

FIG. 3 is a schematic diagram of transmissions of different data streams in an XR traffic in the related art. As shown in FIG. 3, a solid line represents a transmission of the packet corresponding to QOS_1, a dotted line represents a transmission of the packet corresponding to QOS_2, a dash-dotted line represents a transmission of the packet corresponding to QOS_3, an arrow from a terminal (user equipment (UE)) to a base station (gNB) represents a transmission of an uplink traffic, and an arrow from the gNB to the UE represents a transmission of a downlink traffic.

### (3) Configured grant (CG) scheduling

The New Radio (NR) supports an uplink CG transmission. The terminal may transmit a physical uplink shared channel (PUSCH) in a CG transmission opportunity based on a pre-configuration of the base station. CG scheduling includes a configured grant type 1 and a configured grant type 2.

In the configured grant type 1, transmission parameters for the PUSCH are configured by radio resource control (RRC), and include a periodicity, an offset, a time domain resource, a frequency domain resource, etc. A periodic PUSCH transmission opportunity may be determined based on configuration information. When new data arrives in a terminal uplink, PUSCH transmission may be directly performed at the most recent transmission opportunity.

In the configured grant type 2, transmission parameters for the PUSCH are jointly configured by RRC and a physical downlink control channel (PDCCH). The RRC configures parameters such as a periodicity, an offset or other parameters, and PDCCH activation signaling notifies a configured configured grant type 2 to activate and indicates scheduling information simultaneously. The terminal may only perform the uplink CG transmission by using a corresponding PUSCH resources only after receiving the activation signaling transmitted from the base station. A PUSCH resource of the configured grant type 2 may be released by PDCCH deactivation signaling transmitted from the base station.

FIG. 4 is a schematic diagram of a transmission of a configured grant type 2 in the related art. As shown in FIG. 4, a horizontal axis represents time, a system frame number (SFN) is 0, and after the base station transmits downlink control information (DCI) activation signaling, the terminal performs the periodic uplink CG transmission. New transmission represents a new transmission, and periodicity represents a transmission periodicity.

### (4) Semi-persistent scheduling (SPS) scheduling

NR supports a downlink SPS transmission. SPS scheduling is configured for service cells of each bandwidth part (BWP) through RRC signaling. Multiple allocated resources are activated simultaneously on the same BWP, and activation and deactivation of downlink SPS are independent.

For the downlink SPS, a downlink resource is allocated by the PDCCH, and the downlink resource indicates SPS activation or deactivation to store or clear based on Layer 1 signaling. When the SPS is configured, RRC configures the following parameters:
①a configured scheduling radio network temporary identity (CS-RNTI), which is used for activation, deactivation and retransmission;
②nrofHARQ-Processes: a number of a hybrid automatic repeat request (HARQ) processes configured for the SPS;
③harq-ProcID-Offset: an offset of the HARQ process of the SPS; and
(4)periodicity: a transmission periodicity of the downlink resource configured by the SPS.

All corresponding configurations are released when the SPS is released by higher layer signaling. After one downlink resource is configured for the SPS, a media access control (MAC) entity may determine an SFN and a slot position of a subsequent Nth downlink resource by the following formula.

For a Nth SPS PDSCH resource, the following formula is used for calculation:
(Number of slots Per Frame×SFN+Slot Number in the Frame)=
[(Number of Slots Per Frame×SFNStart Time+SlotStart Time)+N×Periodicity×Number of Slots Per Frame/10]modulo(1024×Number of Slots Per Frame),
where *Number of Slots Per Frame* represents a number of slots per frame, and *SFNStart Time* and *SlotStart Time* represent an SFN and a slot of the first PDSCH transmission respectively when the downlink resource is initialized.

### (5) Multi-CG transmitting a XR traffic

Multiple configurations of CG for PUSCH are required for carrying to support the transmission of multiple different types of data streams simultaneously. NR Rel-16 standardizes multiple configuration schemes, which mainly uses the multiple configurations of CG for PUSCH to support traffics such as the industrial internet. In the industrial internet traffic, a robotic arm generally includes multiple actuators, multiple sensors, and multiple monitors. The robotic arm is generally connected to only one communication module. NR needs to support multiple different types of data streams simultaneously. Parameters of these data streams, such as periodicities, arrival time, data block sizes, performance requirements, etc., may vary.

FIG. 5 is a schematic diagram of multiple CGs supporting different data stream transmissions in the related art. As shown in FIG. 5, a horizontal axis represents time and a vertical axis represents frequency. Different types of data streams are unlikely to be transmitted with only one CG configuration, and multiple configurations of CG for PUSCH are adopted. Each configuration of CG for PUSCH may have independent periodicities, time-frequency resource locations, time-frequency resource sizes, modulation and coding schemes (MCSs) or other parameters, thereby not only satisfying requirements of low latency and high reliability, but also improving resource utilization.

### (6) Multi-SPS transmitting a XR traffic

A periodicity of a delay-sensitive network traffic is small, and may not be an integer multiple of the number of slots. A minimum periodicity of NR Rel-15 SPS is 10 ms, which cannot support the delay-sensitive network traffic. In response to this, NR Rel-15 enhances the SPS to support a minimum periodicity to be one slot, and may configure multiple SPS. By configuring the multiple SPS, if an SPS PDSCH activation position is appropriate, a non-integer periodicity may be simulated.

At the same time, for non-integer periodicity traffics with varying packet sizes, such as XR video stream traffics, configuring multiple SPSs/CGs may not only solve a problem of non-integer periods, but also adapt to varying packet sizes by providing multiple transmission opportunities close to a position where a packet arrives.

The terminal may provide the base station with a volume of uplink data in a logical channel of the terminal through a buffer status reporting (BSR) mechanism. RRC configures the following parameters to control the BSR:
①periodicBSR-Timer: a periodic BSR timer;
②retxBSR-Timer: a BSR retransmission timer;
③logicalChannelSR-DelayTimerApplied: an application logical channel status reporting (SR) delay timer;
④logicalChannelSR-DelayTimer: a logical channel SR delay timer;
(5)logicalChannelSR-Mask: a logical channel SR mask; and
⑥logicalChannelGroup: a logical channel group.

Each logical channel is allocated to a which logical channel group (LCG) it belongs based on a parameter logicalChannelGroup, and a maximum number of LCGs is 8. In the NR system, the terminal reports the BSR based on the LCG. The BSR includes two types of bit fields: LCG identity (ID) and buffer size. The LCG ID and the buffer size are in one-to-one correspondence. The LCG ID identifies an LCG for which a buffer status is being reported, and the buffer size identifies a size of a data buffer in the corresponding LCG, that is, a minimum granularity of uplink data buffer size provided by the BSR is the LCG.

### (7) Problem analysis

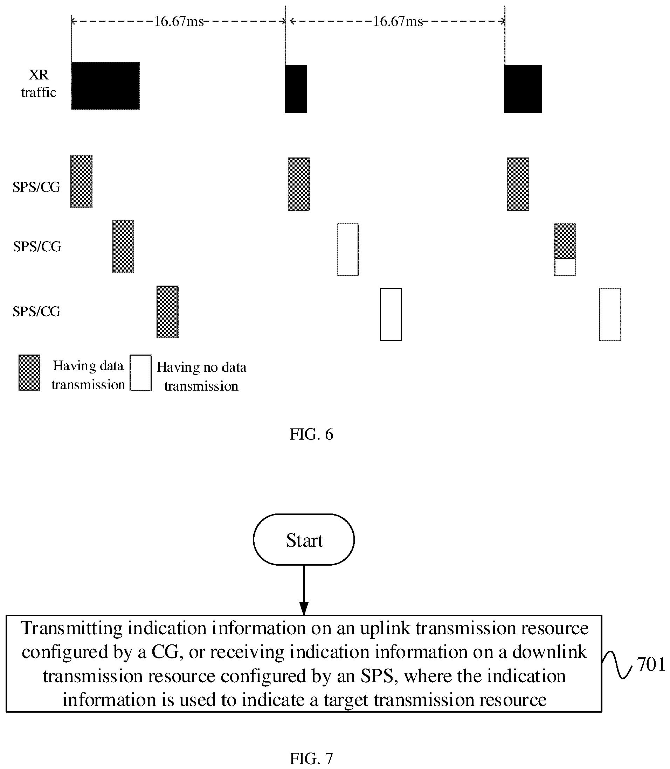

FIG. 6 is a schematic diagram of transmitting an XR service using multiple SPSs/CGs in the related art. As shown in FIG. 6, in the related art, multiple CGs/SPSs are configured to transmit XR traffics. Since an SPS/CG periodicity in the related art cannot match a non-integer periodicity of the XR traffic (such as 16.67 ms), the base station needs to configure a dense SPSs/CGs for the terminal based on a maximum packet transmission requirement to ensure a delay requirement of the XR traffic and adapt to the size of the XR packet.

When the XR packet arrives, the transmitter may select multiple transmission opportunities close to an arrival time for data transmission. Since a size of the XR packet is not fixed, sizes of SPS/CG transmission resources required for each packet transmission are not identical, that is, numbers of required SPS/CG transmission opportunities are not identical. If the arriving packet is small, only part of the SPS/CG resources may be sufficient to complete the transmission.

In case that the transmitter is a terminal, since the size of the XR packet is not fixed, for a situation of configuring the CG based on a maximum demand and the size of the XR packet actually arriving is small, the terminal only needs to transmit the PUSCH in part of the CG transmission opportunities. The BSR mechanism in the related art may only report the size of the packet cached by the terminal, and cannot report a specific resource usage, such as the terminal transmits data on which transmission opportunity (TO) of which CG, or even which resource block groups. The base station does not obtain which CG resources have no data transmission, and cannot reallocate idle uplink resources, resulting in resource waste.

Even if the base station utilizes CG resources for other transmissions with higher priority, the base station has no prior knowledge of whether the CG resources actually have data, and is likely to call CG resources on which data are transmitted, resulting in reduced transmission reliability. The terminal can only inform the base station how many bits of to-be-transmitted uplink data are left through the BSR mechanism, and the base station cannot obtain an actual resource usage of the terminal by the BSR alone.

Only by presetting a CG resource selection rule between the base station and the terminal, can the base station obtain the terminal resource usage through BSR reporting. For example, after reporting the BSR, the terminal strictly utilizes subsequent CG transmission opportunities in chronological order. Since the rule is preset, the terminal can only select resources based on the preset rule every time a packet arrives, which greatly restricts a behavior of the terminal, and the selection of CG transmission opportunities cannot flexibly match the transmission of a current packet.

In case that the transmitter is a base station, the base station may only transmit the PDSCH in some SPS transmission opportunities. Although the base station knows which SPS resources are idle, can utilize the idle resources for other purposes by itself, and will not waste CG resources, the terminal does not obtain which SPS resources have no data transmission, and will still detect and receive each SPS transmission opportunity, resulting in power consumption waste of the terminal, affecting user experience and the service life of a terminal's battery.

In view of the above problems in the related art, embodiments of the present application provide methods and apparatuses for transmitting signaling, and a storage medium, through transmitting, by the terminal, indication information indicating a target transmission resource on an uplink transmission resource configured by the CG, the network device may obtain an actual transmission status of resources reserved for the CG within a period of time, to avoid uplink CG resource waste or resource collision; or, through receiving, by the terminal, indication information indicating a target transmission resource on a downlink transmission resource configured by the SPS, the terminal may obtain whether it is required to detect and receive data on the target transmission resource, to avoid unnecessary power consumption overhead.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The terms "first" and "second" in the embodiments of the present application are used to distinguish similar objects rather than to describe a specific order or sequence.

In the embodiments of the present application, the term "multiple" refers to two or more than two, and other quantifiers are similar.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

FIG. 7 is a first schematic flowchart of a method for transmitting signaling according to an embodiment of the present application. As shown in FIG. 7, an embodiment of the present application provides a method for transmitting signaling, which is executed by a terminal, and includes at least the following steps.

Step 701: transmitting indication information on an uplink transmission resource configured by a CG, or receiving indication information on a downlink transmission resource configured by an SPS, where the indication information is used to indicate a target transmission resource.

In an embodiment, the terminal the transmits the indication information on the uplink transmission resource configured by the CG, and the indication information is used to indicate the target transmission resource. By transmitting, by the terminal, the indication information on the uplink transmission resource configured by the CG, the network device may obtain an actual usage of CG resources by the terminal.

The terminal receives the indication information on the downlink transmission resource configured by the SPS, and the indication information is used to indicate the target transmission resource. By receiving the indication information on the downlink transmission resource configured by the SPS, the terminal may obtain whether it needs to detect and receive data on the target transmission resource.

The target transmission resource may be a resource having a data transmission or a resource having no data transmission.

For example, if the target transmission resource is a resource having a data transmission, the terminal transmits the indication information on the uplink transmission resource configured by the CG, the network device determines the target transmission resource having the data transmission based on the indication information, and reallocates transmission resources other than the target transmission resource.

For example, if the target transmission resource is a resource having no data transmission, the terminal transmits the indication information on the uplink transmission resource configured by the CG, the network device determines the target transmission resource has no data transmission based on the indication information, and allocates the target transmission resource to a higher priority traffic when a higher priority uplink traffic arrives.

For example, if the target transmission resource is a resource having a data transmission, the terminal receives the indication information on the downlink transmission resource configured by the SPS, and the terminal determines that the target transmission resource has to-be-received data based on the indication information, thereby skipping the detection and reception on SPS transmission opportunities other than the target transmission resource.

For example, if the target transmission resource is a resource having no data transmission, the terminal receives the indication information on the downlink transmission resource configured by the SPS, and the terminal determines that the target transmission resource has no to-be-received data based on the indication information, thereby skipping reception and detection of the target transmission resource.

In the method for transmitting the signaling provided by the embodiment of the present application, through transmitting, by the terminal, the indication information indicating the target transmission resource on the uplink transmission resource configured by the CG, the network device may obtain the actual transmission status of the resources reserved for the CG within a period of time, to avoid uplink CG resource waste or resource collision; or, through receiving, by the terminal, the indication information indicating the target transmission resource on the downlink transmission resource configured by the SPS, the terminal may obtain whether it needs to detect and receive data on the target transmission resource, to avoid unnecessary power consumption overhead.

In an embodiment, transmitting the indication information on the uplink transmission resource configured by the CG includes:
transmitting the indication information on a first uplink CG resource set, where the target transmission resource includes a second uplink CG resource set, and a first association relationship exists between the first uplink CG resource set and the second uplink CG resource set.

In an embodiment, the terminal transmits the indication information on the first uplink CG resource set, the indication information is used to indicate the target transmission resource, the target transmission resource includes the second uplink CG resource set, and the first association relationship exists between the first uplink CG resource set and the second uplink CG resource set.

The first uplink CG resource set is a set including part or all of CG resources having a data transmission. The second uplink CG resource set may be a set including all CG resources having a data transmission; or a set including part or all of CG resources without data transmission; or a set including CG resources having a data transmission and CG resources having no data transmission. The CG resources having a data transmission and the CG resources having no data transmission may be distinguished by different bits of the indication information, for example, bit "1" indicates that the corresponding CG resource has a data transmission, and bit "0" indicates that the corresponding CG resource has no data transmission. The first uplink CG resource set is determined from a periodicity and an offset configured by the network device.

The first uplink CG resource set corresponds to one or more CGs, and the second uplink CG resource set corresponds to one or more CGs.

In case that both the first uplink CG resource set and the second uplink CG resource set include CG resources having a data transmission, the first uplink CG resource set may be a subset of the second uplink CG resource set. The first association relationship exists between the first uplink CG resource set and the second uplink CG resource set by configuring the same parameters by the network device.

In the method for transmitting the signaling provided by the embodiment of the present application, through transmitting, by the terminal, the indication information on the first uplink CG resource set, the second uplink CG resource set is indicated, the network device may determine the actual usage for the CG resources of the terminal based on the second uplink CG resource set, thereby reallocating idle CG resources or avoiding calling CG resources having a data transmission.

In an embodiment, the first association relationship includes:
a CG corresponding to the first uplink CG resource set and a CG corresponding to the second uplink CG resource set are configured with a same first parameter.

In an embodiment, the first association relationship between the first uplink CG resource set and the second uplink CG resource set may mean that: the CG corresponding to the first uplink CG resource set and the CG corresponding to the second uplink CG resource set are configured with the same first parameter.

In an embodiment, the first parameter includes at least one of the following:
a CG group identity; or
a transmission periodicity.

In an embodiment, the terminal is configured with one or more CGs for transmitting a traffic. Configuration parameters of the CG include a CG group identity, a CG transmission periodicity, etc. CGs that share one CG group identity form one CG group.

The CG group identity is configured by the network device through signaling, such as RRC signaling, DCI activation signaling, etc. The first uplink CG resource set and the second uplink CG resource set in the embodiment of the present application may both be subsets of one CG group.

The terminal may determine the CG belonging to the same CG group based on the CG group identity.

The first uplink CG resource set and the second uplink CG resource set may be associated by configuring the same first parameter, and the first parameter includes at least one of the following:
a CG group identity, where the CG corresponding to the first uplink CG resource set and the CG corresponding to the second uplink CG resource set have the same CG group identity and belong to one CG group; or
a transmission periodicity, where the CG corresponding to the first uplink CG resource set and the CG corresponding to the second uplink CG resource set have the same CG transmission periodicity.

In an embodiment, transmitting the indication information on the first uplink CG resource set includes:
transmitting a PUSCH on the first uplink CG resource set, where the PUSCH carries the indication information.

In an embodiment, the PUSCH is transmitted on the first uplink CG resource set, and the PUSCH carries the indication information. For example, the indication information is carried in a media access control control element (MAC CE) of the PUSCH.

In an embodiment, the first uplink CG resource set includes part or all of CG transmission opportunities used for a PUSCH transmission having data.

In an embodiment, the terminal determines the transmission opportunities of all CGs in the CG group, and determines that the transmission opportunities of CGs belong to the same CG group based on the CG group identity.

The terminal transmits the indication information on the first uplink CG resource set, and the first uplink CG resource set may include all CG transmission opportunities used for the PUSCH transmission having the data, and the first uplink CG resource set may also include part of the CG transmission opportunities used for the PUSCH transmission having the data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by the network device.

In an embodiment, the first uplink CG resource set includes the part or all of CG transmission opportunities used for the PUSCH transmission having the data. The CG transmission opportunities in the first uplink CG resource set may include the CG transmission opportunity used for the first PUSCH transmission having the data after the first time. The first time may be determined from the first periodicity and the first offset configured by the network device.

In an embodiment, the part or all of the CG transmission opportunities used for the PUSCH transmission having the data include one or more CG transmission opportunities.

In an embodiment, the first uplink CG resource set includes the part or all of the CG transmission opportunities used for the PUSCH transmission having the data. The number of CG transmission opportunities in the first uplink CG resource set is one or more.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, the first uplink CG resource set includes the part or all of the CG transmission opportunities used for the PUSCH transmission having the data. The CG transmission opportunities in the first uplink CG resource set may include all CG transmission opportunities used for the PUSCH transmission having the data within the first time window. The start point and the duration of the first time window are configured by the network device or predefined by the protocol.

An end point of the first time window may be determined based on a time point when the terminal receives a first hybrid automatic repeat request-acknowledge (HARQ-ACK) feedback information, for indicating the PUSCH carrying the indication information is decoded correctly.

In an embodiment, an end point of the first time window is a time point when the terminal receives first HARQ-ACK feedback information, where the first HARQ-ACK feedback information is used to indicate that the PUSCH carrying the indication information is decoded correctly.

In an embodiment, an end point of the first time window is a time point after the terminal receives first HARQ-ACK feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, for CG resources, one CG corresponds to one or more CG transmission opportunities, and one CG transmission opportunity corresponds to one or more resource block groups.

The indication information is used to indicate the target transmission resource, and the granularity of the target transmission resource may be a CG transmission opportunity in the second uplink CG resource set, and the granularity of the target transmission resource may also be a resource block group in a CG transmission opportunity in the second uplink CG resource set.

The indication information may include different levels of indication bit fields, and is used to indicate whether target transmission resources of different granularities have a data transmission.

In an embodiment, the indication information includes a first-level indication bit field, and the first-level indication bit field is used to indicate that no data is transmitted on the CG transmission opportunity. For example, bit "1" indicates that data is transmitted on the CG transmission opportunity corresponding to the second uplink CG resource set, and bit "0" indicates that no data is transmitted on the CG transmission opportunity corresponding to the second uplink CG resource set.

In an embodiment, the indication information includes a second-level indication bit field, and the second-level indication bit field is used to indicate that no data is transmitted on the resource block group in the CG transmission opportunity. For example, bit "1" indicates that data is transmitted on the resource block group in the transmission opportunity corresponding to the second uplink CG resource set, and bit "0" indicates that no data is transmitted on the resource block group in the transmission opportunity corresponding to the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

For example, when a bit in the first-level indication bit field is "1 ", it needs to determine whether data is transmitted in conjunction of the second-level bit field. When a bit in the first-level indication bit field is "0", it means that no data is transmitted on the CG transmission opportunity in the corresponding second uplink CG resource set. The second-level indication bit field includes an index bit and an indication bit. The index bit indicates a position of the "1" bit in the first-level indication bit field corresponding to a current second-level indication bit field. An indication bit being "0" indicates that no data is transmitted on the resource block group in the corresponding CG transmission opportunity, and an indication bit being "1" indicates that data is transmitted on the resource block group in the corresponding CG transmission opportunity.

In an embodiment, receiving the indication information on the downlink transmission resource configured by the SPS includes:
receiving the indication information on a first downlink SPS resource set, where the target transmission resource includes a second downlink SPS resource set, and a second association relationship exists between the first downlink SPS resource set and the second downlink SPS resource set.

In an embodiment, the terminal receives the indication information on the first downlink SPS resource set, the indication information is used to indicate the target transmission resource, the target transmission resource includes the second downlink SPS resource set, and the second association relationship exists between the first downlink SPS resource set and the second downlink SPS resource set.

The first downlink SPS resource set is a set including part or all of SPS resources having to-be-received data. The second downlink SPS resource set may be a set including all SPS resources having to-be-received data; or a set including part or all of SPS resources having no to-be-received data; or a set including SPS resources having to-be-received data and SPS resources having no to-be-received data. The SPS resources having to-be-received data and the SPS resources having no to-be-received data may be distinguished by different bits of the indication information, for example, bit "1" indicates that the corresponding SPS resource has to-be-received data, and bit "0" indicates that the corresponding SPS resource has no to-be-received data. The first downlink SPS resource set is determined from a periodicity and an offset configured by the network device.

The first downlink SPS resource set corresponds to one or more SPSs, and the second downlink SPS resource set corresponds to one or more SPSs.

In case that both the first downlink SPS resource set and the second downlink SPS resource set include CG resources having to-be-received data, the first downlink SPS resource set may be a subset of the second downlink SPS resource set. The second association relationship exists between the first downlink SPS resource set and the second downlink SPS resource set by configuring the same parameters by the network device.

In an embodiment, after receiving the indication information on the first downlink SPS resource set, the method further includes:
skipping detection and reception on an SPS transmission opportunity in the second downlink SPS resource set.

In an embodiment, when the second downlink SPS resource set is a set including part or all of SPS resources having no to-be-received data, after the terminal receives the indication information on the first downlink SPS resource set, the terminal may skip the detection and reception on SPS transmission opportunities in the second downlink SPS resource set.

When the second downlink SPS resource set is a set including all SPS resources having to-be-received data, after the terminal receives the indication information on the first downlink SPS resource set, the terminal may skip the detection and reception on SPS transmission opportunities other than the second downlink SPS resource set.

In the method for transmitting the signaling provided by the embodiment of the present application, through receiving, by the terminal, the indication information on the first downlink SPS resource set, where the indication information is used to indicate the second downlink SPS resource set, the terminal may skip the detection and reception on the SPS transmission opportunity having no to-be-received data based on the second downlink SPS resource set. In a scenario such as SPSs being densely configured, the terminal does not need to perform PUSCH detection and reception on the SPS transmission opportunity having no to-be-received data, which may avoid unnecessary power consumption overhead of the terminal, improve user experience and prolong the service life of a terminal's battery.

In an embodiment, the second association relationship includes that an SPS corresponding to the first downlink SPS resource set and an SPS corresponding to the second downlink SPS resource set are configured with a same second parameter.

In an embodiment, the second association relationship between the first downlink SPS resource set and the second downlink SPS resource set may mean that: the SPS corresponding to the first downlink SPS resource set and the SPS corresponding to the second downlink SPS resource set are configured with the same second parameter.

In an embodiment, the second parameter includes at least one of the following:
an SPS group identity; or
a transmission periodicity.

In an embodiment, the terminal is configured with one or more SPSs for transmitting a traffic. Configuration parameters of the SPS include an SPS group identity, an SPS transmission periodicity, etc. SPSs that share one SPS group identity form one SPS group.

The SPS group identity is configured by the network device through signaling, such as RRC signaling, DCI activation signaling, etc. The first downlink SPS resource set and the second downlink SPS resource set of the embodiment of the present application may both be subsets of one SPS group.

The terminal may determine the SPS belonging to the same SPS group based on the SPS group identity.

The first downlink SPS resource set and the second downlink SPS resource set may be associated by configuring the same second parameter, and the second parameter includes at least one of the following:
an SPS group identity, where the SPS corresponding to the first downlink SPS resource set and the SPS corresponding to the second downlink SPS resource set have the same SPS group identity and belong to one SPS group; or
a transmission periodicity, where the SPS corresponding to the first downlink SPS resource set and the SPS corresponding to the second downlink SPS resource set have the same SPS transmission periodicity.

In an embodiment, receiving the indication information on the first downlink SPS resource set includes:
receiving a PDSCH on the first downlink SPS resource set, where the PDSCH carries the indication information.

In an embodiment, the PDSCH is received on the first downlink SPS resource set, and the PDSCH carries the indication information. For example, the indication information is carried in an MAC CE of the PDSCH.

In an embodiment, the first downlink SPS resource set includes part or all of SPS transmission opportunities used for a PDSCH transmission having data.

In an embodiment, the terminal determines transmission opportunities of all SPSs in the SPS group, and determines that the transmission opportunities of the SPSs belong to the same SPS group based on the SPS group identity.

The terminal receives the indication information on the first downlink SPS resource set, the first downlink SPS resource set may include all SPS transmission opportunities used for the PDSCH transmission having the data, and the first downlink SPS resource set may also include part of the SPS transmission opportunities used for the PDSCH transmission having the data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the first downlink SPS resource set includes the part or all of the SPS transmission opportunities used for the PDSCH transmission having the data. The SPS transmission opportunities in the first downlink SPS resource set may include the SPS transmission opportunity used for the first PDSCH transmission having the data after the second time. The second time may be determined from the second periodicity and the second offset configured by the network device.

In an embodiment, the part or all of SPS transmission opportunities include one or more SPS transmission opportunities.

In an embodiment, the first downlink SPS resource set includes the part or all of the SPS transmission opportunities used for the PDSCH transmission having the data. The number of SPS transmission opportunities in the first downlink SPS resource set is one or more.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, the first downlink SPS resource set includes the part or all of the SPS transmission opportunities used for the PDSCH transmission having the data. The SPS transmission opportunities in the first downlink SPS resource set may include all SPS transmission opportunities used for the PDSCH transmission having the data within the second time window. The start point and the duration of the second time window are predefined by the network device configuration or protocol.

An end point of the second time window may be determined based on a time point when the terminal transmits second HARQ-ACK feedback information for indicating the PDSCH carrying the indication information is decoded correctly.

In an embodiment, an end point of the second time window is a time point when a terminal transmits second HARQ-ACK feedback information, where the second HARQ-ACK feedback information is used to indicate that a PDSCH carrying the indication information is decoded correctly.

In an embodiment, an end point of the second time window is a time point after the terminal transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, for SPS resources, one SPS corresponds to one or more SPS transmission opportunities, and one SPS transmission opportunity corresponds to one or more resource block groups.

The indication information is used to indicate the target transmission resource, and the granularity of the target transmission resource may be an SPS transmission opportunity in the second downlink SPS resource set, and the granularity of the target transmission resource may also be a resource block group in an SPS transmission opportunity in the second downlink SPS resource set.

The indication information may include different levels of indication bit fields, and is used to indicate whether target transmission resources of different granularities have a data transmission.

When the granularity of the target transmission resource is the SPS transmission opportunity in the second downlink SPS resource set, the terminal may determine whether data is to be received on the SPS transmission opportunity in the second downlink SPS resource set based on the indication information.

When the granularity of the target transmission resource is the resource block group in the SPS transmission opportunity in the second downlink SPS resource set, the terminal may determine whether data is to be received on the resource block group in the SPS transmission opportunity in the second downlink SPS resource set based on the indication information.

In an embodiment, the indication information includes a third-level indication bit field, and the third-level indication bit field is used to indicate that no data is to be received on the SPS transmission opportunity. For example, bit "1" indicates that data is to be received on the SPS transmission opportunity corresponding to the second downlink SPS resource set, and bit "0" indicates that no data is to be received on the SPS transmission opportunity corresponding to the second downlink SPS resource set.

In an embodiment, the indication information includes a fourth-level indication bit field, and the fourth-level indication bit field is used to indicate that no data is to be received on the resource block group in the SPS transmission opportunity. For example, bit "1" indicates that data is to be received on the resource block group in the transmission opportunity corresponding to the second downlink SPS resource set, and bit "0" indicates that no data is to be received on the resource block group in the transmission opportunity corresponding to the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

For example, when a bit in the third-level indication bit field is "1", it needs to determine whether data is to be received in conjunction with the fourth-level bit field. When a bit in the third-level indication bit field is "0", it means that no data is to be received on the SPS transmission opportunity in the corresponding second downlink SPS resource set. The fourth-level indication bit field includes an index bit and an indication bit, the index bit indicates a position of the "1" bit in the third-level indication bit field corresponding to a current fourth-level indication bit field, an indication bit being "0" indicates that no data is to be received on the resource block group in the corresponding SPS transmission opportunity, and an indication bit being "1" indicates that data is to be received on the resource block group in the corresponding SPS transmission opportunity.

In an embodiment, the indication information is used to indicate the target transmission resource within a third time window, where a start point and a duration of the third time window are configured by the network device or predefined by a protocol.

In an embodiment, the indication information is used to indicate the target transmission resource within the third time window.

For example, the terminal transmits the indication information on the first uplink CG resource set, and the indication information is used to indicate a CG resource having the same CG group identity as the CG corresponding to the first uplink CG resource set within the third time window.

The start point and duration of the third time window are configured by the network device or predefined by the protocol. For example, the terminal receives RRC signaling, and the CG parameters configured by the RRC signaling includes information about the start point and the duration of the third time window. For example, the terminal receives the CG activated by DCI and obtains the information about the start point and the duration of the third time window. The network device can flexibly change a time range that the terminal needs to indicate based on the configuration.

In an embodiment, the start point of the third time window may be a next slot of the time domain of the first uplink CG resource set, and the duration of the third time window is the transmission periodicity of the CG corresponding to the first uplink CG resource set or a maximum value of the transmission periodicity.

For example, the terminal receives the indication information on the first downlink SPS resource set, and the indication information is used to indicate an SPS resource within the third time window that had the same SPS group identity as the SPS corresponding to the first downlink SPS resource set.

The start point and the duration of the third time window are configured by the network device or predefined by the protocol. For example, the terminal receives RRC signaling, and SPS parameters configured by the RRC signaling include information about the start point and the duration of the third time window. For example, the terminal receives the SPS activated by DCI and obtains the information about the start point and the duration of the third time window. The network device can flexibly change a time range that the terminal needs to indicate based on the configuration.

In an embodiment, the start point of the third time window may be a next slot of the time domain of the first downlink SPS resource set, and the duration of the third time window is the transmission periodicity of the SPS corresponding to the first downlink SPS resource set or a maximum value of the transmission periodicity.

In an embodiment, the target transmission resource includes one or more transmission opportunities, and a number of the transmission opportunities or a maximum number of the transmission opportunities is configured by the network device.

In an embodiment, the target transmission resource includes one or more transmission opportunities, and the network device may configure the number of transmission opportunities as a predetermined number. The transmission opportunity may also be configured with a maximum number by the network device, and a transmitter device selects a to-be-indicated actual number by itself.

For example, the target transmission resource includes the second uplink CG resource set, and the number of CG transmission opportunities in the second uplink CG resource set is configured as a predetermined number by the network device; or, a maximum number of CG transmission opportunities that may be configured by the network device is ten, and the second uplink CG resource set actually indicated by the terminal includes eight CG transmission opportunities.

For example, the target transmission resource includes the second downlink SPS resource set, and the network device configures the number of SPS transmission opportunities in the second downlink SPS resource as a predetermined number; or, a maximum number of SPS transmission opportunities that may be indicated by the network device configuration is twenty, and the second downlink SPS resource set actually indicated by the network device includes seventeen SPS transmission opportunities.

In the method for transmitting the signaling provided by the embodiment of the present application, through transmitting, by the terminal, the indication information indicating the target transmission resource on the uplink transmission resource configured by the CG, the network device may obtain the actual transmission status of the resources reserved for the CG within a period of time, to avoid uplink CG resource waste or resource collision; or, through receiving, by the terminal, the indication information indicating the target transmission resource on the downlink transmission resource configured by the SPS, the terminal may obtain whether it needs to detect and receive data on the target transmission resource, to avoid unnecessary power consumption overhead.

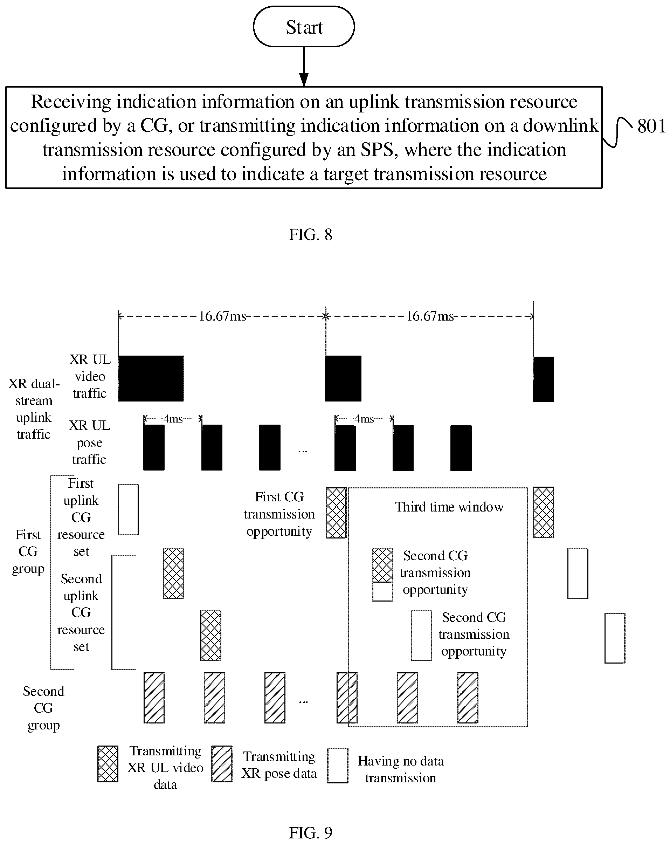

FIG. 8 is a second schematic flowchart of a method for transmitting signaling according to an embodiment of the present application. As shown in FIG. 8, the embodiment of the present application provides a method for transmitting signaling, which is executed by a network device, such as a base station, and includes at least the following steps.

Step 801: receiving indication information on an uplink transmission resource configured by a CG, or transmitting indication information on a downlink transmission resource configured by an SPS, where the indication information is used to indicate a target transmission resource.

In an embodiment, the network device receives the indication information on the uplink transmission resource configured by the CG, and the indication information is used to indicate the target transmission resource. Through receiving the indication information on the uplink transmission resource configured by the CG, the network device may obtain an actual usage of the CG resource by a terminal.

The network device transmits the indication information on the downlink transmission resource configured by the SPS, and the indication information is used to indicate the target transmission resource. By transmitting the indication information on the downlink transmission resource configured by the SPS, the network enables the terminal to obtain whether it needs to detect and receive data on the target transmission resource.

The target transmission resource may be a resource having a data transmission or a resource having no data transmission.

For example, if the target transmission resource is a resource having a data transmission, the network device receives the indication information on the uplink transmission resource configured by the CG, and the network device determines that the target transmission resource has the transmission based on the indication information, thereby reallocating transmission resources other than the target transmission resource.

For example, if the target transmission resource is a resource having no data transmission, the network device receives the indication information on the uplink transmission resource configured by the CG, and the network device determines that the target transmission resource has no data transmission based on the indication information, thereby allocating the target transmission resource to the higher priority traffic when a higher priority uplink traffic arrives.

For example, if the target transmission resource is a resource having a data transmission, the network device transmits the indication information on the downlink transmission resource configured by the SPS, the terminal determines the target transmission resource having to-be-received data based on the indication information, and skips the detection and reception on the SPS transmission opportunities other than the target transmission resource.

For example, if the target transmission resource is a resource having no data transmission, the network device transmits the indication information on the downlink transmission resource configured by the SPS, the terminal determines that the target transmission resource has no to-be-received data based on the indication information, and skips reception and detection of the target transmission resource.

In the method for transmitting the signaling provided by the embodiment of the present application, through receiving, by the network device, the indication information indicating the target transmission resource on the uplink transmission resource configured by the CG, the network device may obtain the actual transmission status of the resources reserved for the CG within a period of time to avoid uplink CG resource waste or resource collision; or, through transmitting, by the network device, the indication information indicating the target transmission resource on the downlink transmission resource configured by the SPS, the terminal may obtain whether it needs to detect and receive data on the target transmission resource to avoid unnecessary power consumption overhead.

In an embodiment, receiving the indication information on the uplink transmission resource configured by the CG includes:
receiving the indication information on a first uplink CG resource set, where the target transmission resource includes a second uplink CG resource set, and a first association relationship exists between the first uplink CG resource set and the second uplink CG resource set.

In an embodiment, after receiving the indication information on the first uplink CG resource set, the method further includes:
reallocating the second uplink CG resource set.

In an embodiment, when the second uplink CG resource set is a set including part or all of the CG resources having no data transmission, after the network device receives the indication information on the first uplink CG resource set, the network device may reallocate the second uplink CG resource set. Alternatively, when a higher priority traffic arrives, the network device may avoid allocating CG resources other than the second uplink CG resource set to the higher priority traffic.

When the second uplink CG resource set is a set including all CG resources having a data transmission, after the network device receives the indication information on the first uplink CG resource set, the network device may reallocate the CG resources other than the second uplink CG resource set. Alternatively, when a higher priority traffic arrives, the network device may avoid allocating CG resources in the second uplink CG resource set to the higher priority traffic.

In the method for transmitting the signaling provided by the embodiment of the present application, through receiving, by the network device, the indication information on the first uplink CG resource set, where the indication information is used to indicate the second uplink CG resource set, the network device may obtain the actual transmission status of the resources reserved for the CG within a period of time in the future based on the second uplink CG resource set. On one hand, when there is an uplink resource demand, such as an uplink dynamic scheduling request, the network device allocates the uplink resources having no data transmission indicated by the terminal, which effectively avoids the waste of uplink resources caused by dense configuration of multiple CGs, thereby improving capacity. On the other hand, when a higher priority uplink traffic arrives, the network device may avoid allocating CG reserved resources having a data transmission to the higher priority traffic, thereby avoiding the reduction of reliability due to resource collision.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, the network device configures the CG corresponding to the first uplink CG resource set and the CG corresponding to the second uplink CG resource set to have the same first parameter, such as the same CG group identity or CG transmission periodicity.

In an embodiment, receiving the indication information on the first uplink CG resource set includes:
receiving a PUSCH on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first HARQ-ACK feedback information, where the first HARQ-ACK feedback information is used to indicate that a PUSCH carrying the indication information is decoded correctly.

In an embodiment, an end point of the first time window is the time point after the network device transmits the first HARQ-QCK feedback information, and the first HARQ-ACK feedback information is used to indicate that the PUSCH carrying the indication information is decoded correctly.

In an embodiment, the target transmission resource includes a resource block group in a CG transmission opportunity in a second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, transmitting the indication information on the downlink transmission resource configured by the SPS includes:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, the network device configures the SPS corresponding to the first downlink SPS resource set and the SPS corresponding to the second downlink SPS resource set to have the same second parameter, such as the same SPS group identity or SPS transmission periodicity.

In an embodiment, transmitting the indication information on the downlink transmission resources configured by the SPS includes:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, an end point of the second time window is a time point after the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the start point of the third time window is a next slot of the time domain of the first uplink CG resource set, and the duration of the third time window is the transmission periodicity of the CG corresponding to the first uplink CG resource set or a maximum value of the transmission periodicity.

In an embodiment, the start point of the third time window is a next slot of the time domain of the first downlink SPS resource set, and the duration of the third time window is the transmission periodicity of the SPS corresponding to the first downlink SPS resource set or a maximum value of the transmission periodicity.

In an embodiment, the target transmission resource includes one or more transmission opportunities, and a number of the transmission opportunities or a maximum number of the transmission opportunities is configured by the network device.

Contents of the predetermined modes and preset conditions of the embodiment of the present application may be referred to the above method embodiments, which is not repeated here.

Solutions of the embodiments of the present application are further introduced through several specific examples.

### Example 1:

The base station configures the CG corresponding to the first uplink CG resource set and the CG corresponding to the second uplink CG resource set through signaling to have the same CG group identity, and the terminal transmits the indication information on the first uplink CG resource set to indicate the second uplink CG resource set within the third time window.

An XR dual-stream uplink traffic is taken as an example, in which the base station and the terminal agree by a protocol that the start point of the third time window is determined to be the next slot of the time domain of the CG transmission opportunity in the first uplink CG resource set, and the length is the maximum value of the transmission periodicity of the CG corresponding to the first uplink CG resource set. FIG. 9 is a first schematic diagram of a CG group transmitting an XR traffic according to an embodiment of the present application. As shown in FIG. 9, the base station configures a first CG group and a second CG group. The first CG group includes three CGs. The first CG group is used to transmit an XR UL video traffic, and the second CG group is used to transmit an XR UL pose traffic. The terminal transmits a PUSCH on the first uplink CG resource set, the PUSCH carries indication information, and the indication information is used to indicate the second uplink CG resource set within the third time window.

The base station determines whether data is transmitted on the second uplink CG resource set within the third time window, or determines whether data is transmitted on the CG transmission opportunity in the second uplink CG resource set within the third time window, or determines whether data is transmitted on the resource block group in the CG transmission opportunity in the second uplink CG resource set within the third time window based on the indication information.

The indication information includes a first bit field and/or a second bit field, the first bit field is used to indicate whether data is transmitted on the CG transmission opportunity, and the second bit field is used to indicate whether data is transmitted on the resource block group in the CG transmission opportunity.

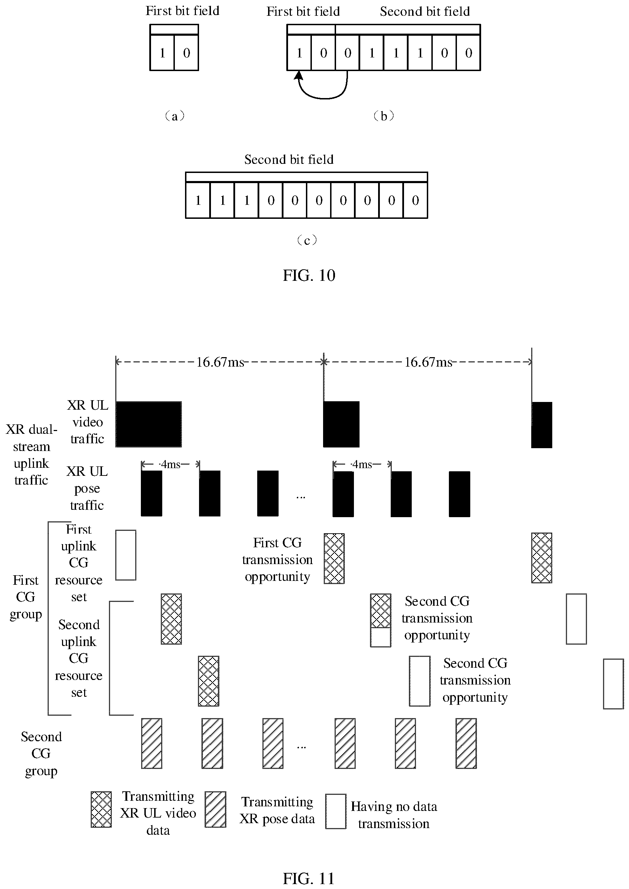

FIG. 10 is a first schematic diagram of a bit field included in indication information when a CG/SPS group transmits an XR traffic according to an embodiment of the present application. As shown in FIG. 10 (a), the indication information includes the first bit field. The base station determines whether data is transmitted on the CG transmission opportunity in the second uplink CG resource set within the third time window based on the indication information. Bit "1" indicates that data is transmitted on the CG transmission opportunity corresponding to the second uplink CG resource set, and bit "0" indicates that no data is transmitted on the CG transmission opportunity corresponding to the second uplink CG resource set.

As shown in FIG. 10 (b), the indication information includes the first bit field and the second bit field, and the base station determines whether data is transmitted on the resource block group in the CG transmission opportunity in the second uplink CG resource set within the third time window based on the indication information.

When a bit in the first bit field is "1", it needs to determine whether data is transmitted in conjunction with the second bit field. When a bit in the first bit field is "0", it indicates that no data is transmitted on the CG transmission opportunity in the corresponding second uplink CG resource set. The second bit field includes an index bit and an indication bit. The index bit indicates a position of the "1" bit in the first bit field corresponding to a current second bit field. An indication bit being "0" indicates that no data is transmitted on the resource block group in the corresponding CG transmission opportunity, and an indication bit being "1" indicates that data is transmitted on the resource block group in the corresponding CG transmission opportunity.

As shown in FIG. 10 (c), the indication information includes the second bit field, and the base station determines whether data is transmitted on the resource block group in the CG transmission opportunity in the second uplink CG resource set within the third time window based on the indication information.

Bit "1" indicates that data is transmitted on the resource block group in the transmission opportunity corresponding to the second uplink CG resource set, and bit "0" indicates that no data is transmitted on the resource block group in the transmission opportunity corresponding to the second uplink CG resource set.

The base station receives the PUSCH transmitted from the terminal on the first uplink CG resource set, and determines, based on the indication information carried by the PUSCH, that the terminal has no data transmission on which CG transmission opportunities or which resource block groups in the second uplink CG resource set, that is, determines idle CG resources. If there is a situation where different CGs overlap at the same resource and these CGs are not associated with each other, the base station may determine that the CG resources at an overlap are idle CG resources only after receiving multiple indication information and determining that all CGs have no data transmission at the overlap.

The base station may allocate the idle CG resources for other uplink transmissions, such as dynamically scheduling the terminal to transmit uplink data on the idle CG resources.

### Example 2:

The base station configures the CG corresponding to the first uplink CG resource set and the CG corresponding to the second uplink CG resource set through signaling to have the same CG group identity, and the terminal transmits the indication information on the first uplink CG resource set to indicate that no data is transmitted in the second uplink CG resource set. The second uplink CG resource set includes one or more transmission opportunities. A number or a maximum number of the transmission opportunities is configured by the base station.

An XR dual-stream uplink traffic is taken as an example, in which the maximum number of CG transmission opportunities configured by the base station is Nmax. FIG. 11 is a second schematic diagram of a CG group transmitting an XR traffic according to an embodiment of the present application. As shown in FIG. 11, the base station configures a first CG group and a second CG group. The first CG group includes three CGs. The first CG group is used to transmit an XR UL video traffic, and the second CG group is used to transmit an XR UL pose traffic. The terminal transmits a PUSCH on the first uplink CG resource set, the PUSCH carries indication information, and the indication information is used to indicate the second uplink CG resource set. The second uplink CG resource set includes one or more CG transmission opportunities. The maximum number of CG transmission opportunities is Nmax=2.

The base station determines whether data is transmitted on the second uplink CG resource set within the third time window, or determines whether data is transmitted on the CG transmission opportunity in the second uplink CG resource set within the third time window, or determines whether data is transmitted on the resource block group in the CG transmission opportunity in the second uplink CG resource set within the third time window based on the indication information.

The indication information includes three levels of indication bit fields: a first bit field is used to indicate that the maximum number of CG transmission opportunities is Nmax=2, a second bit field is used to indicate whether data is transmitted on the CG transmission opportunity, and a third bit field is used to indicate whether data is transmitted on the resource block group in the CG transmission opportunity.

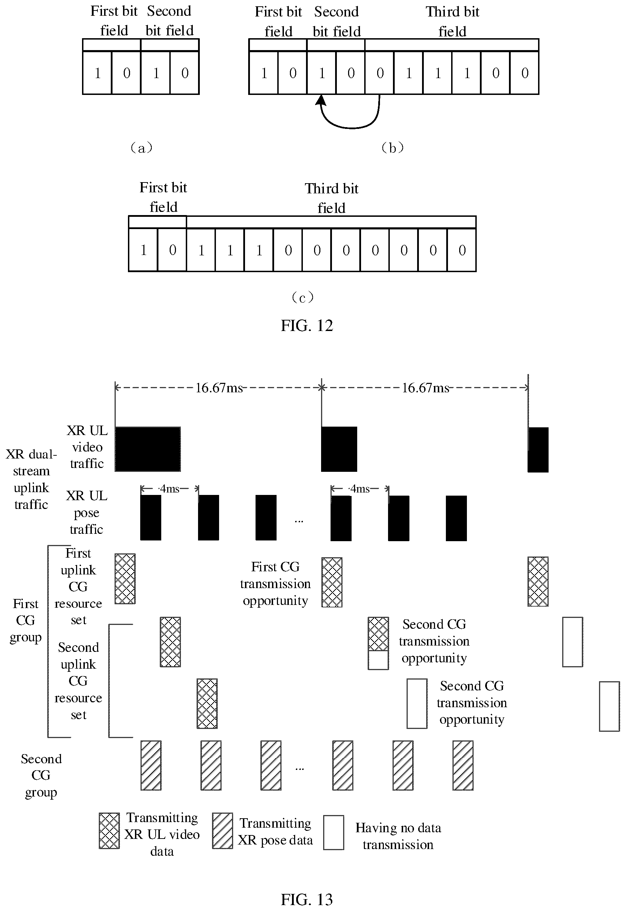

FIG. 12 is a second schematic diagram of a bit field included in indication information when a CG/SPS group transmits an XR traffic according to an embodiment of the present application. As shown in FIG. 12 (a), the indication information includes the first bit field and the second bit field. The base station determines that the number of CG transmission opportunities in the second uplink CG resource set is two based on the first bit field. The second bit field indicates whether data is transmitted on the CG transmission opportunities in the second uplink CG resource set. Bit "1" indicates that data is transmitted on the CG transmission opportunity corresponding to the second uplink CG resource set, and bit "0" indicates that no data is transmitted on the CG transmission opportunity corresponding to the second uplink CG resource set.

As shown in FIG. 12 (b), the indication information includes the first bit field, the second bit field and the third bit field, and the base station determines whether data is transmitted on the resource block group in the CG transmission opportunity in the second uplink CG resource set based on the indication information.

The base station determines that the number of CG transmission opportunities in the second uplink CG resource set is two based on the first bit field. When a bit in the second bit field is "1", it needs to determine whether data is transmitted in conjunction with the third bit field. When a bit in the second bit field is "0", it indicates that no data is transmitted on the CG transmission opportunity in the corresponding second uplink CG resource set. The third bit field includes an index bit and an indication bit. The index bit indicates a position of the "1" bit in the second bit field corresponding to a current third bit field. An indication bit being "0" indicates that no data is transmitted on the resource block group in the corresponding CG transmission opportunity, and an indication bit being "1" indicates that data is transmitted on the resource block group in the corresponding CG transmission opportunity.

As shown in FIG. 12 (c), the indication information includes the first bit field and the third bit field, and the base station determines whether data is transmitted on the resource block group in the CG transmission opportunity in the second uplink CG resource set within the third time window based on the indication information.

The base station determines that the number of CG transmission opportunities in the second uplink CG resource set is two based on the first bit field. In the third bit field, bit "1" indicates that data is transmitted on the resource block group in the transmission opportunity corresponding to the second uplink CG resource set, and bit "0" indicates that no data is transmitted on the resource block group in the transmission opportunity corresponding to the second uplink CG resource set.

The base station receives the PUSCH transmitted from the terminal on the first uplink CG resource set, and determines, based on the indication information carried by the PUSCH, that the terminal has no data transmission on which CG transmission opportunities or which resource block groups on the second uplink CG resource set, that is, determines idle CG resources. If there is a situation where different CGs overlap at the same resource, and these CGs are not associated with each other, the base station may determine that the CG resources at an overlap are idle CG resources only after receiving multiple indication information and determining that all CGs have no data transmission at the overlap.

The base station may allocate the idle CG resources for other uplink transmissions, such as dynamically scheduling the terminal to transmit uplink data on the idle CG resources.

### Example 3:

The base station configures the CG corresponding to the first uplink CG resource set and the CG corresponding to the second uplink CG resource set through signaling to have the same CG transmission periodicity, and the terminal transmits the indication information on the first uplink CG resource set to indicate that no data is transmitted in the second uplink CG resource set. The second uplink CG resource set includes one or more transmission opportunities. A number or a maximum number of the transmission opportunities is configured by the base station.

An XR dual-stream uplink traffic is taken as an example, in which the maximum number of CG transmission opportunities configured by the base station is Nmax. FIG. 13 is a third schematic diagram of a CG group transmitting an XR traffic according to an embodiment of the present application. As shown in FIG. 13, the base station configures a first CG group and a second CG group. The first CG group includes three CGs. The first CG group is used to transmit an XR UL video traffic, and the second CG group is used to transmit an XR UL pose traffic. The terminal transmits a PUSCH on the first uplink CG resource set, the PUSCH carries indication information, and the indication information is used to indicate the second uplink CG resource set. The second uplink CG resource set includes one or more CG transmission opportunities. The number of CG transmission opportunities is Nmax=2.

The base station determines whether data is transmitted on the second uplink CG resource set within the third time window, or determines whether data is transmitted on the CG transmission opportunity in the second uplink CG resource set within the third time window, or determines whether data is transmitted on the resource block group in the CG transmission opportunity in the second uplink CG resource set within the third time window based on the indication information.

The indication information includes three levels of indication bit fields: a first bit field is used to indicate that the maximum number of CG transmission opportunities is Nmax=2, a second bit field is used to indicate whether data is transmitted on the CG transmission opportunity, and a third bit field is used to indicate whether data is transmitted on the resource block group in the CG transmission opportunity.

A schematic diagram of a bit field included in the indication information during the CG group transmitting an XR traffic in this example may be referred to FIG. 12. As shown in FIG. 12(a), the indication information includes the first bit field and the second bit field. The base station determines that the number of CG transmission opportunities in the second uplink CG resource set is two based on the first bit field. The second bit field indicates whether data is transmitted on the CG transmission opportunities in the second uplink CG resource set. Bit "1" indicates that data is transmitted on the CG transmission opportunity corresponding to the second uplink CG resource set, and bit "0" indicates that no data is transmitted on the CG transmission opportunity corresponding to the second uplink CG resource set.

As shown in FIG. 12 (b), the indication information includes the first bit field, the second bit field and the third bit field, and the base station determines whether data is transmitted on the resource block group in the CG transmission opportunity in the second uplink CG resource set based on the indication information.

The base station determines that the number of CG transmission opportunities in the second uplink CG resource set is two based on the first bit field. When a bit in the second bit field is "1", it needs to determine whether data is transmitted in conjunction with the third bit field. When a bit in the second bit field is "0", it indicates that no data is transmitted on the CG transmission opportunity in the corresponding second uplink CG resource set. The third bit field includes an index bit and an indication bit. The index bit indicates a position of the "1" bit in the second bit field corresponding to a current third bit field. An indication bit being "0" indicates that no data is transmitted on the resource block group in the corresponding CG transmission opportunity, and an indication bit being "1" indicates that data is transmitted on the resource block group in the corresponding CG transmission opportunity.

As shown in FIG. 12 (c), the indication information includes the first bit field and the third bit field, and the base station determines whether data is transmitted on the resource block group in the CG transmission opportunity in the second uplink CG resource set within the third time window based on the indication information.

The base station determines that the number of CG transmission opportunities in the second uplink CG resource set is two based on the first bit field. In the third bit field, bit "1" indicates that data is transmitted on the resource block group in the transmission opportunity corresponding to the second uplink CG resource set, and bit "0" indicates that no data is transmitted on the resource block group in the transmission opportunity corresponding to the second uplink CG resource set.

The base station receives the PUSCH transmitted from the terminal on the first uplink CG resource set, and determines, based on the indication information carried by the PUSCH, that the terminal has no data transmission on which CG transmission opportunities or which resource block groups on the second uplink CG resource set, that is, determines idle CG resources. If there is a situation where different CGs overlap at the same resource, and these CGs are not associated with each other, the base station may determine that the CG resources at an overlap are idle CG resources only after receiving multiple indication information and determining that all CGs have no data transmission at the overlap.

The base station may allocate the idle CG resources for other uplink transmissions, such as dynamically scheduling the terminal to transmit uplink data on the idle CG resources.

### Example 4:

The base station configures the CG corresponding to the first uplink CG resource set and the CG corresponding to the second uplink CG resource set through signaling to have the same CG transmission periodicity, and the terminal transmits the indication information on the first uplink CG resource set to indicate that no data is transmitted in the second uplink CG resource set within the third time window.

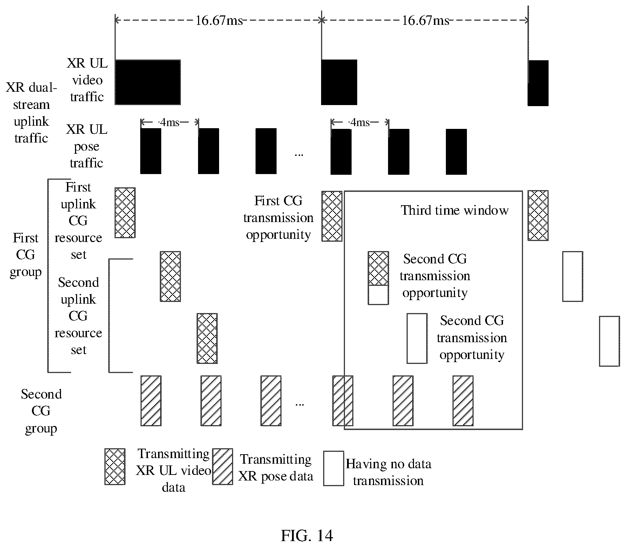

An XR dual-stream uplink traffic is taken as an example, in which the base station and the terminal agree by a protocol that the start point of the third time window is determined to be the next slot of the time domain of the CG transmission opportunity in the first uplink CG resource set, and the length is the maximum value of the transmission periodicity of the CG corresponding to the first uplink CG resource set as an example. FIG. 14 is a fourth schematic diagram of a CG group transmitting an XR traffic according to an embodiment of the present application. As shown in FIG. 14, the base station configures a first CG group and a second CG group. The first CG group includes three CGs. The first CG group is used to transmit an XR UL video traffic, and the second CG group is used to transmit an XR UL pose traffic. The terminal transmits a PUSCH on the first uplink CG resource set, the PUSCH carries indication information, and the indication information is used to indicate the second uplink CG resource set within the third time window.

The base station determines whether data is transmitted on the second uplink CG resource set within the third time window, or determines whether data is transmitted on the CG transmission opportunity in the second uplink CG resource set within the third time window, or determines whether data is transmitted on the resource block group in the CG transmission opportunity in the second uplink CG resource set within the third time window based on the indication information.

The indication information includes a first bit field and/or a second bit field, the first bit field is used to indicate whether data is transmitted on the CG transmission opportunity, and the second bit field is used to indicate whether data is transmitted on the resource block group in the CG transmission opportunity.

A schematic diagram of a bit field included in the indication information during the CG group transmitting an XR traffic in this example may be referred to FIG. 10. As shown in FIG. 10 (a), the indication information includes the first bit field. The base station determines whether data is transmitted on the CG transmission opportunity in the second uplink CG resource set within the third time window based on the indication information. Bit "1" indicates that data is transmitted on the CG transmission opportunity corresponding to the second uplink CG resource set, and bit "0" indicates that no data is transmitted on the CG transmission opportunity corresponding to the second uplink CG resource set.

As shown in FIG. 10 (b), the indication information includes the first bit field and the second bit field, and the base station determines whether data is transmitted on the resource block group in the CG transmission opportunity in the second uplink CG resource set within the third time window based on the indication information.

When a bit in the first bit field is "1", it needs to determine whether data is transmitted in conjunction with the second bit field. When a bit in the first bit field is "0", it indicates that no data is transmitted on the CG transmission opportunity in the corresponding second uplink CG resource set. The second bit field includes an index bit and an indication bit. The index bit indicates a position of the "1" bit in the first bit field corresponding to a current second bit field. An indication bit being "0" indicates that no data is transmitted on the resource block group in the corresponding CG transmission opportunity, and an indication bit being "1" indicates that data is transmitted on the resource block group in the corresponding CG transmission opportunity.

As shown in FIG. 10 (c), the indication information includes the second bit field, and the base station determines whether data is transmitted on the resource block group in the CG transmission opportunity in the second uplink CG resource set within the third time window based on the indication information.

Bit "1" indicates that data is transmitted on the resource block group in the transmission opportunity corresponding to the second uplink CG resource set, and bit "0" indicates that no data is transmitted on the resource block group in the transmission opportunity corresponding to the second uplink CG resource set.

The base station receives the PUSCH transmitted from the terminal on the first uplink CG resource set, and determines, based on the indication information carried by the PUSCH, that the terminal has no data transmission on which CG transmission opportunities or which resource block groups on the second uplink CG resource set, that is, determines idle CG resources. If there is a situation where different CGs overlap at the same resource, and these CGs are not related to each other, the base station may determine that the CG resources at an overlap are idle CG resources only after receiving multiple indication information and determining that all CGs have no data transmission at the overlap.

The base station may allocate the idle CG resources for other uplink transmissions, such as dynamically scheduling the terminal to transmit uplink data on the idle CG resources.

### Example 5:

The base station configures the SPS corresponding to the first downlink SPS resource set and the SPS corresponding to the second downlink SPS resource set to have the same SPS group identity through signaling, and the terminal receives the indication information on the first downlink SPS resource set, indicating that no data is to be received in the second downlink SPS resource set within the third time window.

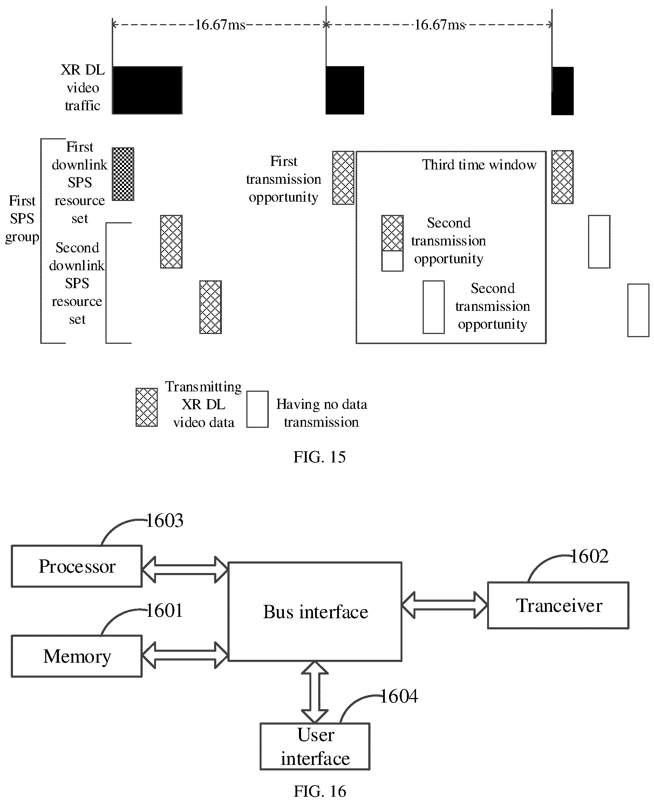

An XR dual-stream downlink traffic is taken as an example, in which the base station and the terminal agree by a protocol that the start point of the third time window is determined to be the next slot of the time domain of the SPS transmission opportunity in the first downlink SPS resource set, and the length is the maximum value of the transmission periodicity of the SPS corresponding to the first downlink SPS resource set. FIG. 15 is a schematic diagram of a SPS group transmitting an XR traffic according to an embodiment of the present application. As shown in FIG. 15, the base station configures a first SPS group to transmit an XR DL video traffic, and the first SPS group includes three SPSs. The terminal receives a PDSCH on the first downlink SPS resource set, the PDSCH carries indication information, and the indication information is used to indicate the second downlink SPS resource set within the third time window.

The terminal determines whether data is to be received on the second downlink SPS resource set within the third time window, or determines whether data is to be received on the SPS transmission opportunity in the second downlink SPS resource set within the third time window, or determines whether data is to be received on the resource block group in the SPS transmission opportunity in the second downlink SPS resource set within the third time window based on the indication information.

The indication information includes a first bit field and/or a second bit field, the first bit field is used to indicate whether data is to be received on the SPS transmission opportunity, and the second bit field is used to indicate whether data is to be received on the resource block group in the SPS transmission opportunity.

A schematic diagram of a bit field included in the indication information during the SPS group transmitting an XR traffic in this example may be referred to FIG. 10. As shown in FIG. 10 (a), the indication information includes a first bit field. The terminal determines whether data is to be received on the SPS transmission opportunity in the second downlink SPS resource set within the third time window based on the indication information. Bit "1" indicates that data is to be received on the SPS transmission opportunity corresponding to the second downlink SPS resource set, and bit "0" indicates that no data is to be received on the SPS transmission opportunity corresponding to the second downlink SPS resource set.

As shown in FIG. 10 (b), the indication information includes the first bit field and the second bit field, and the terminal determines whether data is to be received on the resource block group in the SPS transmission opportunity in the second downlink SPS resource set within the third time window based on the indication information.

When a bit in the first bit field is "1", it needs to determine whether data is to be received in conjunction with the second bit field. When a bit in the first bit field is "0", it indicates that no data is to be received on the SPS transmission opportunity in the corresponding second downlink SPS resource set. The second bit field includes an index bit and an indication bit. The index bit indicates a position of the "1" bit in the first bit field corresponding to a current second bit field. An indication bit being "0" indicates that no data is to be received on the resource block group in the corresponding SPS transmission opportunity, and an indication bit being "1" indicates that data is to be received on the resource block group in the corresponding SPS transmission opportunity.

As shown in FIG. 10 (c), the indication information includes the second bit field, and the terminal determines whether data is to be received on the resource block group in the SPS transmission opportunity in the second downlink SPS resource set within the third time window based on the indication information.

Bit "1" indicates that data is to be received on the resource block group corresponding to the transmission opportunity of the second downlink SPS resource set, and bit "0" indicates that no data is to be received on the resource block group corresponding to the transmission opportunity of the second downlink SPS resource set.

The terminal receives the PDSCH transmitted from the base station on the first downlink SPS resource set, and determines, based on the indication information carried by the PDSCH, that the terminal has no data transmission on which SPS transmission opportunities or which resource block groups on the second downlink SPS resource set, that is, determines whether it is required to perform detection and reception on the SPS transmission opportunities. In a scenario of SPSs being densely configured, the terminal does not need to perform PDSCH detection and reception on the SPS transmission opportunity having no to-be-received data, which may avoid unnecessary terminal power consumption overhead, improve user experience and prolong the service life of a terminal's battery.

### Example 6:

The base station configures the SPS corresponding to the first downlink SPS resource set and the SPS corresponding to the second downlink SPS resource set to have the same SPS group identity through signaling. The terminal receives the indication information on the first downlink SPS resource set, indicating that no data is to be received in the second downlink SPS resource set. The second downlink SPS resource set includes one or more transmission opportunities, and a number or a maximum number of transmission opportunities is configured by the base station.

An XR dual-stream downlink traffic is taken as an example, in which the maximum number of SPS transmission opportunities configured by the base station is Nmax. The base station configures a first SPS group to transmit an XR DL video traffic, and the first SPS group includes three SPSs. The terminal receives a PDSCH on the first downlink SPS resource set, and the PDSCH carries indication information, and the indication information is used to indicate the second downlink SPS resource set. The second downlink SPS resource set includes one or more SPS transmission opportunities, and the number of SPS transmission opportunities is Nmax. The first downlink SPS resource set and the second downlink SPS resource set both belong to the first SPS group.

The terminal determines whether data is to be received on the second downlink SPS resource set within the third time window, or determines whether data is to be received on the SPS transmission opportunity in the second downlink SPS resource set within the third time window, or determines whether data is to be received on the resource block group in the SPS transmission opportunity in the second downlink SPS resource set within the third time window based on the indication information.

The indication information includes three levels of indication bit fields: a first bit field is used to indicate that the maximum number of SPS transmission opportunities is Nmax=2, a second bit field is used to indicate whether data is to be received on the SPS transmission opportunity, and a third bit field is used to indicate whether data is to be received on the resource block group in the SPS transmission opportunity.

A schematic diagram of a bit field included in the indication information during the SPS group transmitting an XR traffic in this example may be referred to FIG. 12. As shown in FIG. 12 (a), the indication information includes the first bit field and the second bit field. The terminal determines that the number of SPS transmission opportunities in the second downlink SPS resource set is two based on the first bit field. The second bit field indicates whether data is to be received on the SPS transmission opportunity in the second downlink SPS resource set. Bit "1" indicates that data is to be received on the SPS transmission opportunity corresponding to the second downlink SPS resource set, and bit "0" indicates that no data is to be received on the SPS transmission opportunity corresponding to the second downlink SPS resource set.

As shown in FIG. 12 (b), the indication information includes the first bit field, the second bit field and the third bit field. The terminal determines whether data is to be received on the resource block group in the SPS transmission opportunity in the second downlink SPS resource set based on the indication information.

The terminal determines that the number of SPS transmission opportunities in the second downlink SPS resource set is two based on the first bit field. When a bit in the second bit field is "1", it needs to determine whether data is to be received in conjunction with the third bit field. When a bit in the second bit field is "0", it indicates that no data is to be received on the SPS transmission opportunity in the corresponding second downlink SPS resource set. The third bit field includes an index bit and an indication bit. The index bit indicates a position of the "1" bit in the second bit field corresponding to a current third bit field. An indication bit being "0" indicates that no data is to be received on the resource block group in the corresponding SPS transmission opportunity, and an indication bit being "1" indicates that data is to be received on the resource block group in the corresponding SPS transmission opportunity.

As shown in FIG. 12 (c), the indication information includes the first bit field and the third bit field, and the terminal determines whether data is to be received on the resource block group in the SPS transmission opportunity in the second downlink SPS resource set within the third time window based on the indication information.

The terminal determines that the number of SPS transmission opportunities in the second downlink SPS resource set is two based on the first bit field. In the third bit field, bit "1" indicates that data is to be received on the resource block group corresponding to the transmission opportunity of the second downlink SPS resource set, and bit "0" indicates that no data is to be received on the resource block group corresponding to the transmission opportunity of the second downlink SPS resource set.

The terminal receives the PDSCH transmitted from the base station on the first downlink SPS resource set, and determines, based on the indication information carried by the PDSCH, that the terminal has no data transmission on which SPS transmission opportunities or which resource block groups on the second downlink SPS resource set, that is, determines whether it is required to perform detection and reception on the SPS transmission opportunities. In a scenario of SPSs being densely configured, the terminal does not need to perform PDSCH detection and reception on the SPS transmission opportunity without to-be-received data, which may avoid unnecessary terminal power consumption overhead, improve user experience and prolong the service life of a terminal's battery.

### Example 7:

The base station configures the SPS corresponding to the first downlink SPS resource set and the SPS corresponding to the second downlink SPS resource set to have the same SPS transmission periodicity through signaling. The terminal receives the indication information on the first downlink SPS resource set, indicating that no data is to be received in the second downlink SPS resource set. The second downlink SPS resource set includes one or more transmission opportunities, and a number or a maximum number of transmission opportunities is configured by the base station.

An XR dual-stream downlink traffic is taken as an example, in which the maximum number of SPS transmission opportunities configured by the base station is Nmax. The base station configures a first SPS group to transmit an XR DL video traffic, and the first SPS group includes three SPSs. The terminal receives a PDSCH on the first downlink SPS resource set, and the PDSCH carries indication information, and the indication information is used to indicate the second downlink SPS resource set. The second downlink SPS resource set includes one or more SPS transmission opportunities, and the number of SPS transmission opportunities is Nmax. The first downlink SPS resource set and the second downlink SPS resource set belong to the first SPS group.

The base station determines whether data is to be received on the second downlink SPS resource set within the third time window, or determines whether data is to be received on the SPS transmission opportunity in the second downlink SPS resource set within the third time window, or determines whether data is to be received on the resource block group in the SPS transmission opportunity in the second downlink SPS resource set within the third time window based on the indication information.

The indication information includes three levels of indication bit fields: a first bit field is used to indicate that the maximum number of SPS transmission opportunities is Nmax=2, a second bit field is used to indicate whether data is to be received on the SPS transmission opportunity, and a third bit field is used to indicate whether data is to be received on the resource block group in the SPS transmission opportunity.

A schematic diagram of a bit field included in the indication information during the SPS group transmitting an XR traffic in this example may be referred to FIG. 12. As shown in FIG. 12 (a), the indication information includes the first bit field and the second bit field. The terminal determines that the number of SPS transmission opportunities in the second downlink SPS resource set is two based on the first bit field. The second bit field indicates whether data is to be received on the SPS transmission opportunity in the second downlink SPS resource set. Bit "1" indicates that data is to be received on the SPS transmission opportunity corresponding to the second downlink SPS resource set, and bit "0" indicates that no data is to be received on the SPS transmission opportunity corresponding to the second downlink SPS resource set.

As shown in FIG. 12 (b), the indication information includes the first bit field, the second bit field and the third bit field. The terminal determines whether data is to be received on the resource block group in the SPS transmission opportunity in the second downlink SPS resource set based on the indication information.

The terminal determines that the number of SPS transmission opportunities in the second downlink SPS resource set is two based on the first bit field. When a bit in the second bit field is "1", it needs to determine whether data is to be received in conjunction with the third bit field. When a bit in the second bit field is "0", it indicates that no data is to be received on the SPS transmission opportunity in the corresponding second downlink SPS resource set. The third bit field includes an index bit and an indication bit. The index bit indicates a position of the "1" bit in the second bit field corresponding to a current third bit field. An indication bit being "0" indicates that no data is to be received on the resource block group in the corresponding SPS transmission opportunity, and an indication bit being "1" indicates that data is to be received on the resource block group in the corresponding SPS transmission opportunity.

As shown in FIG. 12 (c), the indication information includes the first bit field and the third bit field, and the terminal determines whether data is to be received on the resource block group in the SPS transmission opportunity in the second downlink SPS resource set within the third time window based on the indication information.

The terminal determines that the number of SPS transmission opportunities in the second downlink SPS resource set is two based on the first bit field. In the third bit field, bit "1" indicates that data is to be received on the resource block group corresponding to the transmission opportunity of the second downlink SPS resource set, and bit "0" indicates that no data is to be received on the resource block group corresponding to the transmission opportunity of the second downlink SPS resource set.

The terminal receives the PDSCH transmitted from the base station on the first downlink SPS resource set, and determines, based on the indication information carried by the PDSCH, that the terminal has no data transmission on which SPS transmission opportunities or which resource block groups on the second downlink SPS resource set, that is, determines whether it is required to perform detection and reception on the SPS transmission opportunities. In a scenario of SPSs being densely configured, the terminal does not need to perform PDSCH detection and reception on the SPS transmission opportunity without to-be-received data, which may avoid unnecessary terminal power consumption overhead, improve user experience and prolong the service life of a terminal's battery.

### Example 8:

The base station configures the SPS corresponding to the first downlink SPS resource set and the SPS corresponding to the second downlink SPS resource set to have the same SPS transmission periodicity through signaling, and the terminal receives the indication information on the first downlink SPS resource set, indicating that no data is to be received in the second downlink SPS resource set within the third time window.

An XR dual-stream downlink traffic is taken as an example, in which the base station and the terminal agree by a protocol that the start point of the third time window is determined to be the next slot of the time domain of the SPS transmission opportunity in the first downlink SPS resource set, and the length is the maximum value of the transmission periodicity of the SPS corresponding to the first downlink SPS resource set. A schematic diagram of the SPS group transmitting an XR traffic in this example may be referred to FIG. 15. As shown in FIG. 15, the base station configures the first SPS group to transmit an XR DL video traffic, and the first SPS group includes three SPSs. The terminal receives a PDSCH on the first downlink SPS resource set, the PDSCH carries indication information, and the indication information is used to indicate the second downlink SPS resource set within the third time window. The first downlink SPS resource set and the second SPS resource set belong to the first SPS group.

The terminal determines whether data is to be received on the second downlink SPS resource set within the third time window, or determines whether data is to be received on the SPS transmission opportunity in the second downlink SPS resource set within the third time window, or determines whether data is to be received on the resource block group in the SPS transmission opportunity in the second downlink SPS resource set within the third time window based on the indication information.

The indication information includes a first bit field and/or a second bit field, the first bit field is used to indicate whether data is to be received on the SPS transmission opportunity, and the second bit field is used to indicate whether data is to be received on the resource block group in the SPS transmission opportunity.

A schematic diagram of a bit field included in the indication information during the SPS group transmitting an XR traffic in this example may be referred to FIG. 10. As shown in FIG. 10 (a), the indication information includes a first bit field. The terminal determines whether data is to be received on the SPS transmission opportunity in the second downlink SPS resource set within the third time window based on the indication information. Bit "1" indicates that data is to be received on the SPS transmission opportunity corresponding to the second downlink SPS resource set, and bit "0" indicates that no data is to be received on the SPS transmission opportunity corresponding to the second downlink SPS resource set.

As shown in FIG. 10 (b), the indication information includes the first bit field and the second bit field, and the terminal determines whether data is to be received on the resource block group in the SPS transmission opportunity in the second downlink SPS resource set within the third time window based on the indication information.

When a bit in the first bit field is "1", it needs to determine whether data is to be received in conjunction with the second bit field. When a bit in the first bit field is "0", it indicates that no data is to be received on the SPS transmission opportunity in the corresponding second downlink SPS resource set. The second bit field includes an index bit and an indication bit. The index bit indicates a position of the "1" bit in the first bit field corresponding to a current second bit field. An indication bit being "0" indicates that no data is to be received on the resource block group in the corresponding SPS transmission opportunity, and an indication bit being "1" indicates that data is to be received on the resource block group in the corresponding SPS transmission opportunity.

As shown in FIG. 10 (c), the indication information includes the second bit field, and the terminal determines whether data is to be received on the resource block group in the SPS transmission opportunity in the second downlink SPS resource set within the third time window based on the indication information.

Bit "1" indicates that data is to be received on the resource block group corresponding to the transmission opportunity of the second downlink SPS resource set, and bit "0" indicates that no data is to be received on the resource block group corresponding to the transmission opportunity of the second downlink SPS resource set.

The terminal receives the PDSCH transmitted from the base station on the first downlink SPS resource set, and determines, based on the indication information carried by the PDSCH, that the terminal has no data transmission on which SPS transmission opportunities or which resource block groups on the second downlink SPS resource set, that is, determines whether it is required to perform detection and reception on the SPS transmission opportunities. In a scenario of SPSs being densely configured, the terminal does not need to perform PDSCH detection and reception on the SPS transmission opportunity without to-be-received data, which may avoid unnecessary terminal power consumption overhead, improve user experience and prolong the service life of a terminal's battery.

FIG. 16 is a schematic structural diagram of a terminal device according to an embodiment of the present application. As shown in FIG. 16, the terminal device includes a memory 1601, a transceiver 1602 and a processor 1603.

The memory 1601 is used to store a computer program, and the transceiver 1602 is used to transmit and receive data under control of the processor 1603.

In FIG. 16, a bus architecture may include any number of interconnected buses and bridges, which are linked together through various circuits of one or more processors represented by the processor 1603 and one or more memories represented by the memory 1601. The bus architecture may also link together various other circuits, such as peripherals, voltage regulators, and power management circuits, etc., which are well known in the art, and therefore are not further described in the present application. The bus interface provides an interface. The transceiver 1602 may include multiple elements, i.e., including a transmitter and a receiver, units for providing communication with various other devices over transmission media including wireless channels, wired channels, fiber optic cables, and the like. For different user equipment, a user interface 1604 may also be an interface capable of externally or internally connecting the required equipment, and the connected equipment includes, but not limited to, a keypad, a display, a speaker, a microphone, a joystick, and the like.

The processor 1603 is responsible for managing the bus architecture and general processing, and the memory 1601 may store data used by the processor 1603 when performing operations.

The processor 1603 may be a central processing unit (CPU), an application specific integrated circuit (ASIC), a field-programmable gate array (FPGA), or a complex programmable logic device (CPLD), the processor may also use a multi-core architecture.

The processor 1603 is used to read the computer program in the memory 1601 and perform operations of:
transmitting indication information on an uplink transmission resource configured by a CG, or receiving indication information on a downlink transmission resource configured by an SPS,
where the indication information is used to indicate a target transmission resource.

In an embodiment, transmitting the indication information on the uplink transmission resource configured by the CG includes:
transmitting the indication information on a first uplink CG resource set, where the target transmission resource includes a second uplink CG resource set, and a first association relationship exists between the first uplink CG resource set and the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, transmitting the indication information on the first uplink CG resource set includes:
transmitting a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the terminal device receives first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

In an embodiment, receiving the indication information on the downlink transmission resource configured by the SPS includes:
receiving the indication information on a first downlink SPS resource set, where the target transmission resource includes a second downlink SPS resource set, and a second association relationship exists between the first downlink SPS resource set and the second downlink SPS resource set.

In an embodiment, after receiving the indication information on the first downlink SPS resource set, the operations further include:
skipping detection and reception on an SPS transmission opportunity in the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, receiving the indication information on the first downlink SPS resource set includes:
receiving a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the terminal device transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

It should be noted here that the above terminal device provided by the embodiments of the present application may implement all the method steps implemented by the above method embodiments executed by a terminal device, and may achieve the same effect. The same parts and beneficial effects as the same method embodiments are not repeated in the present application.

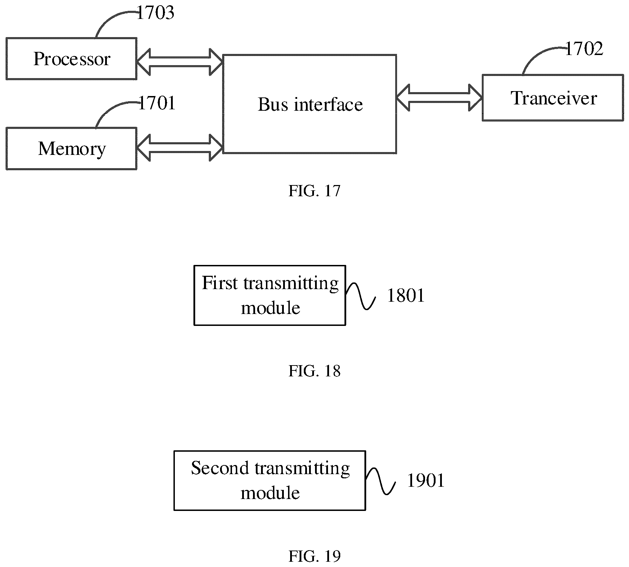

FIG. 17 is a schematic structural diagram of a network device according to an embodiment of the present application. As shown in FIG. 17, the network device includes a memory 1701, a transceiver 1702 and a processor 1703.

The memory 1701 is used to store a computer program, and the transceiver 1702 is used to transmit and receive data under control of the processor 1703.

In FIG. 17, a bus architecture may include any number of interconnected buses and bridges, which are linked together through various circuits of one or more processors represented by the processor 1703 and one or more memories represented by the memory 1701. The bus architecture may also link together various other circuits, such as peripherals, voltage regulators, and power management circuits, etc., which are well known in the art, and therefore are not further described in the present application. The bus interface provides an interface. The transceiver 1702may include multiple elements, i.e., including a transmitter and a receiver, units for providing communication with various other devices over transmission media including wireless channels, wired channels, fiber optic cables, and the like. The processor 1703 is responsible for managing the bus architecture and general processing, and the memory 1701 may store data used by the processor 1703 when performing operations.

The processor 1703 may be a central processing unit (CPU), an application specific integrated circuit (ASIC), a field-programmable gate array (FPGA), or a complex programmable logic device (CPLD), the processor may also use a multi-core architecture.

The processor 1703 is used to read the computer program in the memory 1701 and performing operations of:
receiving indication information on an uplink transmission resource configured by a CG, or transmitting indication information on a downlink transmission resource configured by an SPS,
where the indication information is used to indicate a target transmission resource.

In an embodiment, receiving the indication information on the uplink transmission resource configured by the CG includes:
receiving the indication information on a first uplink CG resource set, where the target transmission resource includes a second uplink CG resource set, and a first association relationship exists between the first uplink CG resource set and the second uplink CG resource set.

In an embodiment, after receiving the indication information on the first uplink CG resource set, the operations further include:
reallocating the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, receiving the indication information on the first uplink CG resource set includes:
receiving a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, transmitting the indication information on the downlink transmission resource configured by the SPS includes:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, transmitting the indication information on the downlink transmission resources configured by the SPS includes:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

It should be noted here that the above network device provided by the embodiments of the present application may implement all the method steps implemented by the above method embodiments executed by a network device, and may achieve the same effect. The same parts and beneficial effects as the same method embodiments are not repeated in the present application.

FIG. 18 is a first schematic structural diagram of an apparatus for transmitting signaling according to an embodiment of the present application. As shown in FIG. 18, the apparatus may be applied to a terminal, including:
a first transmitting module 1801, used for transmitting indication information on an uplink transmission resource configured by a configured grant (CG), or receiving indication information on a downlink transmission resource configured by a semi-persistent scheduling (SPS),
where the indication information is used to indicate a target transmission resource.

In an embodiment, the first transmitting module is further used for:
transmitting the indication information on a first uplink CG resource set, where the target transmission resource includes a second uplink CG resource set, and a first association relationship exists between the first uplink CG resource set and the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, the first transmitting module is further used for:
transmitting a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when a terminal receives first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is transmitted on a CG transmission opportunity, and the second-level indication bit field is used to indicate that no data is transmitted on a resource block group in a CG transmission opportunity.

In an embodiment, the first transmitting module is further used for:
receiving the indication information on a first downlink SPS resource set, where the target transmission resource includes a second downlink SPS resource set, and a second association relationship exists between the first downlink SPS resource set and the second downlink SPS resource set.

In an embodiment, the apparatus further includes a skipping module, which is used for:
skipping detection and reception on an SPS transmission opportunity in the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, the first transmitting module is further used for:
receiving a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when a terminal transmits second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is to be received on an SPS transmission opportunity, and the fourth-level indication bit field is used to indicate that no data is to be received on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

FIG. 19 is a second schematic structural diagram of an apparatus for transmitting signaling according to an embodiment of the present application. As shown in FIG. 19, the apparatus may be applied to a network device, including:
a second transmitting module 1901, used for receiving indication information on an uplink transmission resource configured by a configured grant (CG), or transmitting indication information on a downlink transmission resource configured by a semi-persistent scheduling (SPS),
where the indication information is used to indicate a target transmission resource.

In an embodiment, the second transmitting module is further used for:
receiving the indication information on a first uplink CG resource set, where the target transmission resource includes a second uplink CG resource set, and a first association relationship exists between the first uplink CG resource set and the second uplink CG resource set.

In an embodiment, the apparatus further includes:
an allocation module, used for reallocating the second uplink CG resource set.

In an embodiment, the first association relationship includes:
a CG corresponding to the first uplink CG resource set and a CG corresponding to the second uplink CG resource set are configured with a same first parameter.

In an embodiment, the first parameter includes at least one of the following:
a CG group identity; or
a transmission periodicity.

In an embodiment, the second transmitting module is further used for:
receiving a physical uplink shared channel (PUSCH) on the first uplink CG resource set, where the PUSCH carries the indication information.

In an embodiment, the first uplink CG resource set includes part or all of CG transmission opportunities used for a PUSCH transmission having data.

In an embodiment, the part or all of the CG transmission opportunities used for the PUSCH transmission having the data include a first CG transmission opportunity, in the first uplink CG resource set, used for a PUSCH transmission having data after a first timing, where the first timing is determined from a first periodicity and a first offset configured by a network device.

In an embodiment, the part or all of the CG transmission opportunities used for the PUSCH transmission having the data include one or more CG transmission opportunities.

In an embodiment, the part or all of the CG transmission opportunities used for the PUSCH transmission having the data include all of the CG transmission opportunities, in the first uplink CG resource set, used for a PUSCH transmission having data within a first time window, where a start point and a duration of the first time window are configured by the network device or predefined by a protocol.

In an embodiment, an end point of the first time window is a time point when the network device transmits first hybrid automatic repeat request-acknowledge (HARQ-ACK) feedback information, where the first HARQ-ACK feedback information is used to indicate that a PUSCH carrying the indication information is decoded correctly.

In an embodiment, the target transmission resource includes a resource block group in a CG transmission opportunity in the second uplink CG resource set.

In an embodiment, the indication information includes a first-level indication bit field and/or a second-level indication bit field, where the first-level indication bit field is used to indicate that no data is to be received on a CG transmission opportunity, and the second-level indication bit field is used to indicate that no data is to be received on a resource block group in a CG transmission opportunity.

In an embodiment, the second transmitting module is further used for:
transmitting the indication information on a first downlink SPS resource set, where the target transmission resource includes a second downlink SPS resource set, and a second association relationship exists between the first downlink SPS resource set and the second downlink SPS resource set.

In an embodiment, the second association relationship includes that an SPS corresponding to the first downlink SPS resource set and an SPS corresponding to the second downlink SPS resource set are configured with a same second parameter.

In an embodiment, the second parameter includes at least one of the following:
an SPS group identity; or
a transmission periodicity.

In an embodiment, the second transmitting module is further used for:
transmitting a physical downlink shared channel (PDSCH) on the first downlink SPS resource set, where the PDSCH carries the indication information.

In an embodiment, the first downlink SPS resource set includes part or all of SPS transmission opportunities used for a PDSCH transmission having data.

In an embodiment, the part or all of the SPS transmission opportunities include an SPS transmission opportunity, in the first downlink SPS resource set, used for a first PDSCH transmission having data after a second time, where the second time is determined from a second periodicity and a second offset configured by the network device.

In an embodiment, the part or all of SPS transmission opportunities include one or more SPS transmission opportunities.

In an embodiment, the part or all of the SPS transmission opportunities include all SPS transmission opportunities, in the first downlink SPS resource set, used for the PDSCH transmission having the data within a second time window, where a start point and a duration of the second time window are configured by the network device or predefined by a protocol.

In an embodiment, an end point of the second time window is a time point when the network device has received second HARQ-ACK feedback information, where the second HARQ-ACK feedback information is used to indicate that a PDSCH carrying the indication information is decoded correctly.

In an embodiment, the target transmission resource includes a resource block group in an SPS transmission opportunity in the second downlink SPS resource set.

In an embodiment, the indication information includes a third-level indication bit field and/or a fourth-level indication bit field, where the third-level indication bit field is used to indicate that no data is transmitted on an SPS transmission opportunity, and the fourth-level indication bit field is used to indicate that no data is transmitted on a resource block group in an SPS transmission opportunity.

In an embodiment, the indication information is used to indicate the target transmission resource within a third time window, where a start point and a duration of the third time window are configured by the network device or predefined by a protocol.

In an embodiment, the target transmission resource includes one or more transmission opportunities, and a number of the transmission opportunities or a maximum number of the transmission opportunities is configured by the network device.

The methods and apparatuses provided by various embodiments of the present application are based on the same application concept. Since the methods and apparatuses solve problems based on similar principles, the implementation of the devices and methods can refer to each other, and the repeated parts will not be repeated. It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable-storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above apparatuses according to the embodiments of the present application may implement all the method steps implemented by the above method embodiments, and may achieve the same effect. The same parts and beneficial effects as the same method embodiments are not repeated here.

An embodiments of the present application further provides a processor-readable storage medium, where the processor-readable storage medium stores a computer program, and the computer program is used to cause a processor to perform the methods for transmitting the signaling provided by the above embodiments, for example, including:
transmitting indication information on an uplink transmission resource configured by a CG, or receiving indication information on a downlink transmission resource configured by an SPS, where the indication information is used to indicate a target transmission resource
   or,
receiving indication information on an uplink transmission resource configured by a CG, or transmitting indication information on a downlink transmission resource configured by an SPS, where the indication information is used to indicate a target transmission resource.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmitting signaling, comprising:
transmitting indication information on an uplink transmission resource configured by a configured grant, CG, or receiving indication information on a downlink transmission resource configured by a semi-persistent scheduling, SPS,
wherein the indication information is used to indicate a target transmission resource.

2. The method of claim 1, wherein transmitting the indication information on the uplink transmission resource configured by the CG comprises:
transmitting the indication information on a first uplink CG resource set, wherein the target transmission resource comprises a second uplink CG resource set, and a first association relationship exists between the first uplink CG resource set and the second uplink CG resource set.

3. The method of claim 2, wherein the first association relationship comprises:
a CG corresponding to the first uplink CG resource set and a CG corresponding to the second uplink CG resource set are configured with a same first parameter.

4. The method of claim 3, wherein the first parameter comprises at least one of the following:
a CG group identity; or
a transmission periodicity.

5. The method of claim 2, wherein transmitting the indication information on the first uplink CG resource set comprises:
transmitting a physical uplink shared channel, PUSCH, on the first uplink CG resource set, wherein the PUSCH carries the indication information.

6. The method of claim 5, wherein the first uplink CG resource set comprises part or all of CG transmission opportunities used for a PUSCH transmission having data.

7. The method of claim 6, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

8. The method of claim 6, wherein the part or all of the CG transmission opportunities used for the PUSCH transmission having the data comprise one or more CG transmission opportunities.

9. The method of claim 6, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by a network device or predefined by a protocol.

10. The method of claim 9, wherein an end point of the first time window is a time point when a terminal receives first hybrid automatic repeat request-acknowledge, HARQ-ACK, feedback information, wherein the first HARQ-ACK feedback information is used to indicate that a PUSCH carrying the indication information is decoded correctly.

11. The method of claim 2, wherein the target transmission resource comprises a resource block group in a CG transmission opportunity in the second uplink CG resource set.

12. The method of claim 11, wherein the indication information comprises a first-level indication bit field and/or a second-level indication bit field, wherein the first-level indication bit field is used to indicate that no data is transmitted on a CG transmission opportunity, and the second-level indication bit field is used to indicate that no data is transmitted on a resource block group in a CG transmission opportunity.

13. The method of claim 1, wherein receiving the indication information on the downlink transmission resource configured by the SPS comprises:
receiving the indication information on a first downlink SPS resource set, wherein the target transmission resource comprises a second downlink SPS resource set, and a second association relationship exists between the first downlink SPS resource set and the second downlink SPS resource set.

14. The method of claim 13, wherein after receiving the indication information on the first downlink SPS resource set, the method further comprises:
skipping detection and reception on an SPS transmission opportunity in the second downlink SPS resource set.

15. The method of claim 13, wherein the second association relationship comprises that an SPS corresponding to the first downlink SPS resource set and an SPS corresponding to the second downlink SPS resource set are configured with a same second parameter.

16. The method of claim 15, wherein the second parameter comprises at least one of the following:
an SPS group identity; or
a transmission periodicity.

17. The method of claim 13, wherein receiving the indication information on the first downlink SPS resource set comprises:
receiving a physical downlink shared channel, PDSCH, on the first downlink SPS resource set, wherein the PDSCH carries the indication information.

18. The method of claim 17, wherein the first downlink SPS resource set comprises part or all of SPS transmission opportunities used for a PDSCH transmission having data.

19. The method of claim 18, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by a network device.

20. The method of claim 18, wherein the part or all of SPS transmission opportunities comprise one or more SPS transmission opportunities.

21. The method of claim 18, wherein the part or all of the SPS transmission opportunities comprise all SPS transmission opportunities, in the first downlink SPS resource set, used for the PDSCH transmission having the data within a second time window, wherein a start point and a duration of the second time window are configured by a network device or predefined by a protocol.

22. The method of claim 21, wherein an end point of the second time window is a time point when a terminal transmits second HARQ-ACK feedback information, wherein the second HARQ-ACK feedback information is used to indicate that a PDSCH carrying the indication information is decoded correctly.

23. The method of claim 13, wherein the target transmission resource comprises the resource block group in an SPS transmission opportunity in the second downlink SPS resource set.

24. The method of claim 23, wherein the indication information comprises a third-level indication bit field and/or a fourth-level indication bit field, wherein the third-level indication bit field is used to indicate that no data is to be received on an SPS transmission opportunity, and the fourth-level indication bit field is used to indicate that no data is to be received on a resource block group in an SPS transmission opportunity.

25. The method of claim 1, wherein the indication information is used to indicate the target transmission resource within a third time window, wherein a start point and a duration of the third time window are configured by a network device or predefined by a protocol.

26. The method of claim 1, wherein the target transmission resource comprises one or more transmission opportunities, and a number of the transmission opportunities or a maximum number of the transmission opportunities is configured by a network device.

27. A method for transmitting signaling, comprising:
receiving indication information on an uplink transmission resource configured by a configured grant, CG, or transmitting indication information on a downlink transmission resource configured by a semi-persistent scheduling, SPS,
wherein the indication information is used to indicate a target transmission resource.

28. The method of claim 27, wherein receiving the indication information on the uplink transmission resource configured by the CG comprises:
receiving the indication information on a first uplink CG resource set, wherein the target transmission resource comprises a second uplink CG resource set, and a first association relationship exists between the first uplink CG resource set and the second uplink CG resource set.

29. The method of claim 28, wherein after receiving the indication information on the first uplink CG resource set, the method further comprises:
reallocating the second uplink CG resource set.

30. The method of claim 28, wherein the first association relationship comprises:
a CG corresponding to the first uplink CG resource set and a CG corresponding to the second uplink CG resource set are configured with a same first parameter.

31. The method of claim 30, wherein the first parameter comprises at least one of the following:
a CG group identity; or
a transmission periodicity.

32. The method of claim 28, wherein receiving the indication information on the first uplink CG resource set comprises:
receiving a physical uplink shared channel, PUSCH, on the first uplink CG resource set, wherein the PUSCH carries the indication information.

33. The method of claim 32, wherein the first uplink CG resource set comprises part or all of CG transmission opportunities used for a PUSCH transmission having data.

34. The method of claim 33, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

35. The method of claim 33, wherein the part or all of the CG transmission opportunities used for the PUSCH transmission having the data comprise one or more CG transmission opportunities.

36. The method of claim 33, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by a network device or predefined by a protocol.

37. The method of claim 36, wherein an end point of the first time window is a time point when the network device transmits first hybrid automatic repeat request-acknowledge, HARQ-ACK, feedback information, wherein the first HARQ-ACK feedback information is used to indicate that a PUSCH carrying the indication information is decoded correctly.

38. The method of claim 28, wherein the target transmission resource comprises a resource block group in a CG transmission opportunity in the second uplink CG resource set.

39. The method of claim 38, wherein the indication information comprises a first-level indication bit field and/or a second-level indication bit field, wherein the first-level indication bit field is used to indicate that no data is to be received on a CG transmission opportunity, and the second-level indication bit field is used to indicate that no data is to be received on a resource block group in a CG transmission opportunity.

40. The method of claim 27, wherein transmitting the indication information on the downlink transmission resource configured by the SPS comprises:
transmitting the indication information on a first downlink SPS resource set, wherein the target transmission resource comprises a second downlink SPS resource set, and a second association relationship exists between the first downlink SPS resource set and the second downlink SPS resource set.

41. The method of claim 40, wherein the second association relationship comprises that an SPS corresponding to the first downlink SPS resource set and an SPS corresponding to the second downlink SPS resource set are configured with a same second parameter.

42. The method of claim 41, wherein the second parameter comprises at least one of the following:
an SPS group identity; or
a transmission periodicity.

43. The method of claim 40, wherein transmitting the indication information on the downlink transmission resources configured by the SPS comprises:
transmitting a physical downlink shared channel, PDSCH, on the first downlink SPS resource set, wherein the PDSCH carries the indication information.

44. The method of claim 43, wherein the first downlink SPS resource set comprises part or all of SPS transmission opportunities used for a PDSCH transmission having data.

45. The method of claim 44, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by a network device.

46. The method of claim 44, wherein the part or all of SPS transmission opportunities comprise one or more SPS transmission opportunities.

47. The method of claim 44, wherein the part or all of the SPS transmission opportunities comprise all SPS transmission opportunities, in the first downlink SPS resource set, used for the PDSCH transmission having the data within a second time window, wherein a start point and a duration of the second time window are configured by a network device or predefined by a protocol.

48. The method of claim 47, wherein an end point of the second time window is a time point when the network device has received second HARQ-ACK feedback information, wherein the second HARQ-ACK feedback information is used to indicate that a PDSCH carrying the indication information is decoded correctly.

49. The method of claim 40, wherein the target transmission resource comprises the resource block group in an SPS transmission opportunity in the second downlink SPS resource set.

50. The method of claim 49, wherein the indication information comprises a third-level indication bit field and/or a fourth-level indication bit field, wherein the third-level indication bit field is used to indicate that no data is transmitted on an SPS transmission opportunity, and the fourth-level indication bit field is used to indicate that no data is transmitted on a resource block group in an SPS transmission opportunity.

51. The method of claim 27, wherein the indication information is used to indicate the target transmission resource within a third time window, wherein a start point and a duration of the third time window are configured by a network device or predefined by a protocol.

52. The method of claim 27, wherein the target transmission resource comprises one or more transmission opportunities, and a number of the transmission opportunities or a maximum number of the transmission opportunities is configured by a network device.

53. A terminal device, comprising a memory, a transceiver and a processor,
wherein the memory is used to store a computer program, the transceiver is used to transmit and receive data under control of the processor, and the processor is used to read the computer program in the memory and perform following steps:
transmitting indication information on an uplink transmission resource configured by a configured grant, CG, or receiving indication information on a downlink transmission resource configured by a semi-persistent scheduling, SPS,
wherein the indication information is used to indicate a target transmission resource.

54. The terminal device of claim 53, wherein transmitting the indication information on the uplink transmission resource configured by the CG comprises:
transmitting the indication information on a first uplink CG resource set, wherein the target transmission resource comprises a second uplink CG resource set, and a first association relationship exists between the first uplink CG resource set and the second uplink CG resource set.

55. The terminal device of claim 54, wherein the first association relationship comprises:
a CG corresponding to the first uplink CG resource set and a CG corresponding to the second uplink CG resource set are configured with a same first parameter.

56. The terminal device of claim 55, wherein the first parameter comprises at least one of the following:
a CG group identity; or
a transmission periodicity.

57. The terminal device of claim 54, wherein transmitting the indication information on the first uplink CG resource set comprises:
transmitting a physical uplink shared channel, PUSCH, on the first uplink CG resource set, wherein the PUSCH carries the indication information.

58. The terminal device of claim 57, wherein the first uplink CG resource set comprises part or all of CG transmission opportunities used for a PUSCH transmission having data.

59. The terminal device of claim 58, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

60. The terminal device of claim 58, wherein the part or all of the CG transmission opportunities used for the PUSCH transmission having the data comprise one or more CG transmission opportunities.

61. The terminal device of claim 58, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by a network device or predefined by a protocol.

62. The terminal device of claim 61, wherein an end point of the first time window is a time point when the terminal device receives first hybrid automatic repeat request-acknowledge, HARQ-ACK, feedback information, wherein the first HARQ-ACK feedback information is used to indicate that a PUSCH carrying the indication information is decoded correctly.

63. The terminal device of claim 54, wherein the target transmission resource comprises a resource block group in a CG transmission opportunity in the second uplink CG resource set.

64. The terminal device of claim 63, wherein the indication information comprises a first-level indication bit field and/or a second-level indication bit field, wherein the first-level indication bit field is used to indicate that no data is transmitted on a CG transmission opportunity, and the second-level indication bit field is used to indicate that no data is transmitted on a resource block group in a CG transmission opportunity.

65. The terminal device of claim 53, wherein receiving the indication information on the downlink transmission resource configured by the SPS comprises:
receiving the indication information on a first downlink SPS resource set, wherein the target transmission resource comprises a second downlink SPS resource set, and a second association relationship exists between the first downlink SPS resource set and the second downlink SPS resource set.

66. The terminal device of claim 65, wherein after receiving the indication information on the first downlink SPS resource set, the steps further comprise:
skipping detection and reception on an SPS transmission opportunity in the second downlink SPS resource set.

67. The terminal device of claim 65, wherein the second association relationship comprises that an SPS corresponding to the first downlink SPS resource set and an SPS corresponding to the second downlink SPS resource set are configured with a same second parameter.

68. The terminal device of claim 67, wherein the second parameter comprises at least one of the following:
an SPS group identity; or
a transmission periodicity.

69. The terminal device of claim 65, wherein receiving the indication information on the first downlink SPS resource set comprises:
receiving a physical downlink shared channel, PDSCH, on the first downlink SPS resource set, wherein the PDSCH carries the indication information.

70. The terminal device of claim 69, wherein the first downlink SPS resource set comprises part or all of SPS transmission opportunities used for a PDSCH transmission having data.

71. The terminal device of claim 70, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by a network device.

72. The terminal device of claim 70, wherein the part or all of SPS transmission opportunities comprise one or more SPS transmission opportunities.

73. The terminal device of claim 70, wherein the part or all of the SPS transmission opportunities comprise all SPS transmission opportunities, in the first downlink SPS resource set, used for the PDSCH transmission having the data within a second time window, wherein a start point and a duration of the second time window are configured by a network device or predefined by a protocol.

74. The terminal device of claim 73, wherein an end point of the second time window is a time point when the terminal device transmits second HARQ-ACK feedback information, wherein the second HARQ-ACK feedback information is used to indicate that a PDSCH carrying the indication information is decoded correctly.

75. The terminal device of claim 65, wherein the target transmission resource comprises the resource block group in an SPS transmission opportunity in the second downlink SPS resource set.

76. The terminal device of claim 75, wherein the indication information comprises a third-level indication bit field and/or a fourth-level indication bit field, wherein the third-level indication bit field is used to indicate that no data is to be received on an SPS transmission opportunity, and the fourth-level indication bit field is used to indicate that no data is to be received on a resource block group in an SPS transmission opportunity.

77. The terminal device of claim 53, wherein the indication information is used to indicate the target transmission resource within a third time window, wherein a start point and a duration of the third time window are configured by a network device or predefined by a protocol.

78. The terminal device of claim 53, wherein the target transmission resource comprises one or more transmission opportunities, and a number of the transmission opportunities or a maximum number of the transmission opportunities is configured by a network device.

79. A network device, comprising a memory, a transceiver and a processor,
wherein the memory is used to store a computer program, the transceiver is used to transmit and receive data under control of the processor, and the processor is used to read the computer program in the memory and perform following steps:
receiving indication information on an uplink transmission resource configured by a configured grant, CG, or transmitting indication information on a downlink transmission resource configured by a semi-persistent scheduling, SPS,
wherein the indication information is used to indicate a target transmission resource.

80. The network device of claim 79, wherein receiving the indication information on the uplink transmission resource configured by the CG comprises:
receiving the indication information on a first uplink CG resource set, wherein the target transmission resource comprises a second uplink CG resource set, and a first association relationship exists between the first uplink CG resource set and the second uplink CG resource set.

81. The network device of claim 80, wherein after receiving the indication information on the first uplink CG resource set, the steps further comprise:
reallocating the second uplink CG resource set.

82. The network device of claim 80, wherein the first association relationship comprises:
a CG corresponding to the first uplink CG resource set and a CG corresponding to the second uplink CG resource set are configured with a same first parameter.

83. The network device of claim 82, wherein the first parameter comprises at least one of the following:
a CG group identity; or
a transmission periodicity.

84. The network device of claim 80, wherein receiving the indication information on the first uplink CG resource set comprises:
receiving a physical uplink shared channel, PUSCH, on the first uplink CG resource set, wherein the PUSCH carries the indication information.

85. The network device of claim 84, wherein the first uplink CG resource set comprises part or all of CG transmission opportunities used for a PUSCH transmission having data.

86. The network device of claim 85, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

87. The network device of claim 85, wherein the part or all of the CG transmission opportunities used for the PUSCH transmission having the data comprise one or more CG transmission opportunities.

88. The network device of claim 85, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by the network device or predefined by a protocol.

89. The network device of claim 88, wherein an end point of the first time window is a time point when the network device transmits first hybrid automatic repeat request-acknowledge, HARQ-ACK, feedback information, wherein the first HARQ-ACK feedback information is used to indicate that a PUSCH carrying the indication information is decoded correctly.

90. The network device of claim 80, wherein the target transmission resource comprises a resource block group in a CG transmission opportunity in the second uplink CG resource set.

91. The network device of claim 90, wherein the indication information comprises a first-level indication bit field and/or a second-level indication bit field, wherein the first-level indication bit field is used to indicate that no data is to be received on a CG transmission opportunity, and the second-level indication bit field is used to indicate that no data is to be received on a resource block group in a CG transmission opportunity.

92. The network device of claim 79, wherein transmitting the indication information on the downlink transmission resource configured by the SPS comprises:
transmitting the indication information on a first downlink SPS resource set, wherein the target transmission resource comprises a second downlink SPS resource set, and a second association relationship exists between the first downlink SPS resource set and the second downlink SPS resource set.

93. The network device of claim 92, wherein the second association relationship comprises that an SPS corresponding to the first downlink SPS resource set and an SPS corresponding to the second downlink SPS resource set are configured with a same second parameter.

94. The network device of claim 93, wherein the second parameter comprises at least one of the following:
an SPS group identity; or
a transmission periodicity.

95. The network device of claim 92, wherein transmitting the indication information on the downlink transmission resources configured by the SPS comprises:
transmitting a physical downlink shared channel, PDSCH, on the first downlink SPS resource set, wherein the PDSCH carries the indication information.

96. The network device of claim 95, wherein the first downlink SPS resource set comprises part or all of SPS transmission opportunities used for a PDSCH transmission having data.

97. The network device of claim 96, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by the network device.

98. The network device of claim 96, wherein the part or all of SPS transmission opportunities comprise one or more SPS transmission opportunities.

99. The network device of claim 96, wherein the part or all of the SPS transmission opportunities comprise all SPS transmission opportunities, in the first downlink SPS resource set, used for the PDSCH transmission having the data within a second time window, wherein a start point and a duration of the second time window are configured by the network device or predefined by a protocol.

100. The network device of claim 99, wherein an end point of the second time window is a time point when the network device has received second HARQ-ACK feedback information, wherein the second HARQ-ACK feedback information is used to indicate that a PDSCH carrying the indication information is decoded correctly.

101. The network device of claim 92, wherein the target transmission resource comprises the resource block group in an SPS transmission opportunity in the second downlink SPS resource set.

102. The network device of claim 101, wherein the indication information comprises a third-level indication bit field and/or a fourth-level indication bit field, wherein the third-level indication bit field is used to indicate that no data is transmitted on an SPS transmission opportunity, and the fourth-level indication bit field is used to indicate that no data is transmitted on a resource block group in an SPS transmission opportunity.

103. The network device of claim 79, wherein the indication information is used to indicate the target transmission resource within a third time window, wherein a start point and a duration of the third time window are configured by the network device or predefined by a protocol.

104. The network device of claim 79, wherein the target transmission resource comprises one or more transmission opportunities, and a number of the transmission opportunities or a maximum number of the transmission opportunities is configured by the network device.

105. An apparatus for transmitting signaling, comprising:
a first transmitting module, used for transmitting indication information on an uplink transmission resource configured by a configured grant, CG, or receiving indication information on a downlink transmission resource configured by a semi-persistent scheduling, SPS,
wherein the indication information is used to indicate a target transmission resource.

106. The apparatus of claim 105, wherein the first transmitting module is further used for:
transmitting the indication information on a first uplink CG resource set, wherein the target transmission resource comprises a second uplink CG resource set, and a first association relationship exists between the first uplink CG resource set and the second uplink CG resource set.

107. The apparatus of claim 106, wherein the first association relationship comprises:
a CG corresponding to the first uplink CG resource set and a CG corresponding to the second uplink CG resource set are configured with a same first parameter.

108. The apparatus of claim 107, wherein the first parameter comprises at least one of the following:
a CG group identity; or
a transmission periodicity.

109. The apparatus of claim 106, wherein the first transmitting module is further used for:
transmitting a physical uplink shared channel, PUSCH, on the first uplink CG resource set, wherein the PUSCH carries the indication information.

110. The apparatus of claim 109, wherein the first uplink CG resource set comprises part or all of CG transmission opportunities used for a PUSCH transmission having data.

111. The apparatus of claim 110, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

112. The apparatus of claim 110, wherein the part or all of the CG transmission opportunities used for the PUSCH transmission having the data comprise one or more CG transmission opportunities.

113. The apparatus of claim 110, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by a network device or predefined by a protocol.

114. The apparatus of claim 113, wherein an end point of the first time window is a time point when a terminal receives first hybrid automatic repeat request-acknowledge, HARQ-ACK, feedback information, wherein the first HARQ-ACK feedback information is used to indicate that a PUSCH carrying the indication information is decoded correctly.

115. The apparatus of claim 106, wherein the target transmission resource comprises a resource block group in a CG transmission opportunity in the second uplink CG resource set.

116. The apparatus of claim 115, wherein the indication information comprises a first-level indication bit field and/or a second-level indication bit field, wherein the first-level indication bit field is used to indicate that no data is transmitted on a CG transmission opportunity, and the second-level indication bit field is used to indicate that no data is transmitted on a resource block group in a CG transmission opportunity.

117. The apparatus of claim 105, wherein the first transmitting module is further used for:
receiving the indication information on a first downlink SPS resource set, wherein the target transmission resource comprises a second downlink SPS resource set, and a second association relationship exists between the first downlink SPS resource set and the second downlink SPS resource set.

118. The apparatus of claim 117, further comprising a skipping module, used for:
skipping detection and reception on an SPS transmission opportunity in the second downlink SPS resource set.

119. The apparatus of claim 117, wherein the second association relationship comprises that an SPS corresponding to the first downlink SPS resource set and an SPS corresponding to the second downlink SPS resource set are configured with a same second parameter.

120. The apparatus of claim 119, wherein the second parameter comprises at least one of the following:
an SPS group identity; or
a transmission periodicity.

121. The apparatus of claim 117, wherein the first transmitting module is further used for:
receiving a physical downlink shared channel, PDSCH, on the first downlink SPS resource set, wherein the PDSCH carries the indication information.

122. The apparatus of claim 121, wherein the first downlink SPS resource set comprises part or all of SPS transmission opportunities used for a PDSCH transmission having data.

123. The apparatus of claim 122, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by a network device.

124. The apparatus of claim 122, wherein the part or all of SPS transmission opportunities comprise one or more SPS transmission opportunities.

125. The apparatus of claim 122, wherein the part or all of the SPS transmission opportunities comprise all SPS transmission opportunities, in the first downlink SPS resource set, used for the PDSCH transmission having the data within a second time window, wherein a start point and a duration of the second time window are configured by a network device or predefined by a protocol.

126. The apparatus of claim 125, wherein an end point of the second time window is a time point when a terminal transmits second HARQ-ACK feedback information, wherein the second HARQ-ACK feedback information is used to indicate that a PDSCH carrying the indication information is decoded correctly.

127. The apparatus of claim 117, wherein the target transmission resource comprises the resource block group in an SPS transmission opportunity in the second downlink SPS resource set.

128. The apparatus of claim 127, wherein the indication information comprises a third-level indication bit field and/or a fourth-level indication bit field, wherein the third-level indication bit field is used to indicate that no data is to be received on an SPS transmission opportunity, and the fourth-level indication bit field is used to indicate that no data is to be received on a resource block group in an SPS transmission opportunity.

129. The apparatus of claim 105, wherein the indication information is used to indicate the target transmission resource within a third time window, wherein a start point and a duration of the third time window are configured by a network device or predefined by a protocol.

130. The apparatus of claim 105, wherein the target transmission resource comprises one or more transmission opportunities, and a number of the transmission opportunities or a maximum number of the transmission opportunities is configured by a network device.

131. An apparatus for transmitting signaling, comprising:
a second transmitting module, used for receiving indication information on an uplink transmission resource configured by a configured grant, CG, or transmitting indication information on a downlink transmission resource configured by a semi-persistent scheduling, SPS,
wherein the indication information is used to indicate a target transmission resource.

132. The apparatus of claim 131, wherein the second transmitting module is further used for:
receiving the indication information on a first uplink CG resource set, wherein the target transmission resource comprises a second uplink CG resource set, and a first association relationship exists between the first uplink CG resource set and the second uplink CG resource set.

133. The apparatus of claim 132, further comprising:
an allocation module, used for reallocating the second uplink CG resource set.

134. The apparatus of claim 132, wherein the first association relationship comprises:
a CG corresponding to the first uplink CG resource set and a CG corresponding to the second uplink CG resource set are configured with a same first parameter.

135. The apparatus of claim 134, wherein the first parameter comprises at least one of the following:
a CG group identity; or
a transmission periodicity.

136. The apparatus of claim 132, wherein the second transmitting module is further used for:
receiving a physical uplink shared channel, PUSCH, on the first uplink CG resource set, wherein the PUSCH carries the indication information.

137. The apparatus of claim 136, wherein the first uplink CG resource set comprises part or all of CG transmission opportunities used for a PUSCH transmission having data.

138. The apparatus of claim 137, wherein the part or all of the CG transmission opportunities used for the PUSCH transmission having the data comprise a first CG transmission opportunity, in the first uplink CG resource set, used for a PUSCH transmission having data after a first timing, wherein the first timing is determined from a first periodicity and a first offset configured by a network device.

139. The apparatus of claim 137, wherein the part or all of the CG transmission opportunities used for the PUSCH transmission having the data comprise one or more CG transmission opportunities.

140. The apparatus of claim 137, wherein the part or all of the CG transmission opportunities used for the PUSCH transmission having the data comprise all of the CG transmission opportunities, in the first uplink CG resource set, used for a PUSCH transmission having data within a first time window, wherein a start point and a duration of the first time window are configured by a network device or predefined by a protocol.

141. The apparatus of claim 140, wherein an end point of the first time window is a time point when the network device transmits first hybrid automatic repeat request-acknowledge, HARQ-ACK, feedback information, wherein the first HARQ-ACK feedback information is used to indicate that a PUSCH carrying the indication information is decoded correctly.

142. The apparatus of claim 132, wherein the target transmission resource comprises a resource block group in a CG transmission opportunity in the second uplink CG resource set.

143. The apparatus of claim 142, wherein the indication information comprises a first-level indication bit field and/or a second-level indication bit field, wherein the first-level indication bit field is used to indicate that no data is to be received on a CG transmission opportunity, and the second-level indication bit field is used to indicate that no data is to be received on a resource block group in a CG transmission opportunity.

144. The apparatus of claim 131, wherein the second transmitting module is further used for:
transmitting the indication information on a first downlink SPS resource set, wherein the target transmission resource comprises a second downlink SPS resource set, and a second association relationship exists between the first downlink SPS resource set and the second downlink SPS resource set.

145. The apparatus of claim 144, wherein the second association relationship comprises that an SPS corresponding to the first downlink SPS resource set and an SPS corresponding to the second downlink SPS resource set are configured with a same second parameter.

146. The apparatus of claim 145, wherein the second parameter comprises at least one of the following:
an SPS group identity; or
a transmission periodicity.

147. The apparatus of claim 144, wherein the second transmitting module is further used for:
transmitting a physical downlink shared channel, PDSCH, on the first downlink SPS resource set, wherein the PDSCH carries the indication information.

148. The apparatus of claim 147, wherein the first downlink SPS resource set comprises part or all of SPS transmission opportunities used for a PDSCH transmission having data.

149. The apparatus of claim 148, wherein the part or all of the SPS transmission opportunities comprise an SPS transmission opportunity, in the first downlink SPS resource set, used for a first PDSCH transmission having data after a second time, wherein the second time is determined from a second periodicity and a second offset configured by a network device.

150. The apparatus of claim 148, wherein the part or all of SPS transmission opportunities comprise one or more SPS transmission opportunities.

151. The apparatus of claim 148, wherein the part or all of the SPS transmission opportunities comprise all SPS transmission opportunities, in the first downlink SPS resource set, used for the PDSCH transmission having the data within a second time window, wherein a start point and a duration of the second time window are configured by a network device or predefined by a protocol.

152. The apparatus of claim 151, wherein an end point of the second time window is a time point when the network device has received second HARQ-ACK feedback information, wherein the second HARQ-ACK feedback information is used to indicate that a PDSCH carrying the indication information is decoded correctly.

153. The apparatus of claim 144, wherein the target transmission resource comprises the resource block group in an SPS transmission opportunity in the second downlink SPS resource set.

154. The apparatus of claim 153, wherein the indication information comprises a third-level indication bit field and/or a fourth-level indication bit field, wherein the third-level indication bit field is used to indicate that no data is transmitted on an SPS transmission opportunity, and the fourth-level indication bit field is used to indicate that no data is transmitted on a resource block group in an SPS transmission opportunity.

155. The apparatus of claim 131, wherein the indication information is used to indicate the target transmission resource within a third time window, wherein a start point and a duration of the third time window are configured by a network device or predefined by a protocol.

156. The apparatus of claim 131, wherein the target transmission resource comprises one or more transmission opportunities, and a number of the transmission opportunities or a maximum number of the transmission opportunities is configured by a network device.

157. A processor-readable storage medium, wherein the processor-readable storage medium stores a computer program, and the computer program is used to cause a processor to perform the method of any one of claims 1 to 26, or perform the method of any one of claims 27 to 52.
